# EUROPÄISCHE PATENTSCHRIFT

(11) **EP 3 900 159 B1**
(45) Veröffentlichungstag und Bekanntmachung des Hinweises auf die Patenterteilung: **07.08.2024**
(21) Anmeldenummer: 18826687.8
(22) Anmeldetag: 20.12.2018
(51) Int. Cl.: H02K 1/2795, H02K 7/09, H02K 3/28

(54) **ELEKTROMOTOR MIT VERSCHIEDENEN STERNPUNKTEN**
ELECTRIC MOTOR WITH DIFFERENT STAR POINTS
MOTEUR ÉLECTRIQUE À DIFFÉRENTS POINTS NEUTRES

(43) Veröffentlichungstag der Anmeldung: 27.10.2021
(73) Patentinhaber: Vertiv S.r.l., 35010 Piove di Sacco, (PD) (IT)
(72) Erfinder: SEDLAK, Holger, 82054 Lochhofen / Sauerlach (DE)
(74) Vertreter: Wunderlich & Heim Patentanwälte PartG mbB
(86) Internationale Anmeldenummer: PCT/EP2018/086397
(87) Internationale Veröffentlichungsnummer: WO 2020/126015

(56) Entgegenhaltungen:
- EP-A2- 1 437 287
- WO-A1-2014/207858
- WO-A1-2018/193095
- WO-A1-2018/193096
- DE-A1- 102011 013 885
- DE-A1- 102013 009 776
- FR-A1- 2 966 301
- US-A1- 2018 183 298
- US-B1- 6 392 905
- US-B2- 9 694 845
- JIA HONGYUN ET AL: "Design and analysis of a bearingless doubly salient permanent magnet machine", 2017 20TH INTERNATIONAL CONFERENCE ON ELECTRICAL MACHINES AND SYSTEMS (ICEMS), IEEE, 11 August 2017 (2017-08-11), pages 1 - 5, XP033161409, DOI: 10.1109/ICEMS.2017.8056432
- IIYAMA Y ET AL: "A novel middle-point current-injection type bearingless motor for vibration suppression", ENERGY CONVERSION CONGRESS AND EXPOSITION (ECCE), 2010 IEEE, IEEE, PISCATAWAY, NJ, USA, 12 September 2010 (2010-09-12), pages 1693 - 1698, XP031787325, ISBN: 978-1-4244-5286-6

## Beschreibung

Die vorliegende Erfindung bezieht sich auf Elektromotoren und insbesondere auf Elektromotoren für hohe Drehzahlen. Die Elektromotoren können universell eingesetzt werden. Es wird jedoch besonders auf den Einsatz in einer Wärmepumpe hingewiesen.

Die EP 2 549 113 A2 offenbart einen magnetischen Rotor und eine Rotationspumpe mit einem magnetischen Rotor. Der Rotor ist zum Fördern eines Fluids in einem Pumpengehäuse innerhalb eines Stators der Rotationspumpe magnetisch berührungslos antreibbar und lagerbar. Außerdem ist der Rotor mittels einer äußeren Verkapselung, die einen fluorierten Kohlenwasserstoff aufweist, gekapselt. Innerhalb der Verkapselung umfasst der Rotor einen von einem Metallmantel ummantelten Permanentmagneten. Die Rotationspumpe umfasst ein Pumpengehäuse mit einem Einlass zum Zuführen eines Fluids und einem Auslass zum Abführen des Fluids. Das Fluid ist zum Beispiel eine chemisch aggressive Säure mit einem Anteil eines Gases, z. B. Schwefelsäure mit Ozon. Zur Förderung des Fluids ist im Pumpengehäuse ein magnetischer Rotor berührungslos magnetisch gelagert. Der Rotor ist ferner mit einem magnetischen Antrieb versehen, der elektrische Spulen aufweist. Der Stator ist mit geblechtem Eisen ausgebildet, das mit dem Permanentmagneten des Rotors in magnetischer Wirkverbindung steht. Der Antrieb ist als lagerloser Motor ausgebildet, bei dem der Stator gleichzeitig als Lagerstator und Antriebsstator ausgestaltet ist. Der Rotor ist als Scheibenläufer ausgebildet, wobei die axiale Höhe des Rotors kleiner oder gleich einem halben Durchmesser des Rotors ist.

Die Dissertation ETH Nr. 12870, "Der lagerlose Scheibenmotor", N. Barletta, 1998, offenbart magnetgelagerte Scheibenmotoren. Magnetlager arbeiten vollständig berührungs-, verschleiß-, wartungs- und schmiermittelfrei. Zur aktiven Stabilisierung eines Freiheitsgrades werden zwei regelbare Elektromagnete inklusive elektronischer Ansteuerung benötigt. Der lagerlose Scheibenmotor wird innerhalb einer lagerlosen Blutpumpe als lagerloser Scheibenmotor mit aktivem Axiallager, als Miniatur-Scheibenmotor, oder als lagerloser Bioreaktor eingesetzt. Durch eine Kombination von passiven Reluktanzmagnetlagern und lagerlosem Motor ist es möglich, einen Scheibenrotor mit nur zwei aktiv stabilisierten radialen Freiheitsgraden vollständig zu lagern. Anforderungen nach einem großen Luftspalt, welcher in hermetischen Systemen nötig ist, werden durch die Wahl eines lagerlosen permanentmagnetisch erregten Synchronmotors erfüllt. Ein lagerloser Scheibenmotor, der zum Antrieb einer Axialpumpe zur Herzunterstützung geeignet ist, ist für Drehzahlen von 30.000 Umdrehungen pro Minute ausgelegt, was zu einer kleineren Baugröße führt.

Kommerzielle elektrische Scheibenmotoren sind auch unter der Bezeichnung "Pan Cake-Motor" ("Pfannkuchenmotor") bekannt. Das in den beiden vorhergehenden Referenzen dargestellte Motorkonzept zeichnet sich dadurch aus, dass sich der Stator um den Rotor herum erstreckt. Solche Motoren werden auch als Innenläufer bezeichnet.

Bei dem Innenläuferkonzept existiert die Problematik, dass der Stator immer größer als der Rotor sein muss, dass also die Größe und die Ausbildung des Rotors immer durch das Statorgehäuse begrenzt ist bzw. dass der Rotor die Ausbildung des Stators dominiert. Damit ist das Einsatzgebiet eines solchen Scheibenmotors, der als Innenläufer ausgebildet ist, begrenzt.

Darüber hinaus ist bei Scheibenmotoren grundsätzlich die Problematik vorhanden, dass der Rotor, unabhängig davon, ob er als Innenläufer oder Außenläufer konzipiert ist, Druckdifferenzen bzw. Drücken in bestimmten Richtungen ausgesetzt ist. Diese Drücke führen dazu, dass ein Lager in der Richtung des Drucks, der auf den Rotor wirkt, belastet wird, und damit ein Verschleiß erhöht wird, bzw. dass dann, wenn eine Auslenkung des Rotors erlaubt wird, der Rotor in dieser Richtung ausgelenkt wird und damit Spielräume für diese Auslenkung bereitgestellt werden müssen. Insbesondere dann, wenn die Pumpe eingesetzt wird, um ein Medium von einem Druckgebiet mit einem ersten Druck auf ein Druckgebiet mit einem zweiten Druck zu pumpen, bzw. um überhaupt eine solche Druckdifferenz zu erzeugen, müssen aufwändige konstruktive Maßnahmen getroffen werden, um entweder eine geforderte Verschleißfestigkeit zu erreichen, oder um einen Spielraum für eine auftretende Auslenkung bereitzustellen.

Nachteilig an Elektromotoren und insbesondere Elektromotoren, die in warmen Umgebungen betrieben werden oder aber eine hohe Leistung schaffen sollen, ist die allgegenwärtige Wärmeentwicklung. Hohe Temperaturen im Elektromotor beeinträchtigen zum einen die typischerweise am Rotor angeordneten Permanentmagneten. Wird also der Stator eines Motors zu warm, so überträgt sich die Wärme über den Motorspalt auf den Rotor und die dort vorhandenen Permanentmagnete mit allen damit verbundenen Problemen. Andererseits ist auch die Erwärmung des Stators selbst kritisch. Der Stator ist typischerweise mit Spulen versehen. Eine Erwärmung der Spulen kann zu einem hohen thermischen Stress führen. Dieser hohe thermische Stress in den Spulen kann auf längere Sicht zu einer Ermüdung der Spulendrahtisolation führen. Außerdem können Probleme bezüglich einer Delaminierung des Blechkörpers, also des Statorkörpers, der aus einem Blechkörper besteht, auftreten. Außerdem können aufgrund erhöhter Temperaturen oder hohem thermischen Dauerstress Verformungen bzw. Verwerfungen im Stator dazu führen, dass der Motor nicht mehr so rund läuft, wie er laufen sollte bzw. könnte.

Insbesondere bei schnelldrehenden Motoren mit Drehzahlen über 30.000 Umdrehungen pro Minute ist selbst dann, wenn im Motorspalt ein geringerer Druck im Vergleich zum Umgebungsdruck vorherrscht, die Reibung mit dem dort befindlichen Gas dennoch so groß, dass die Permanentmagnete des Rotors, die direkt im Motorspalt angeordnet sind, dieser hohen Reibungsenergie im Motorspalt und damit der dort entstehenden Wärme ausgesetzt sind. Permanentmagnete haben die Eigenschaft, dass sie, wenn sie zu heiß werden, in ihrer Funktionalität/Magnetisierung nachlassen. Diese Beschädigung ist in bestimmten Fällen sogar nicht reversibel und kann zum kompletten Ausfall des gesamten Elektromotors führen. Doch auch im Betrieb des Elektromotors ist es von großer Bedeutung für sämtliche Parameter, dass die Permanentmagnete in einem optimalen Temperaturbereich gehalten werden, der aufgrund der hohen Wärmeentwicklung wegen der Reibung im Motorspalt keineswegs sichergestellt ist.

Die EP 2 975 731 A2 offenbart einen Scheibenläufer für eine elektrische Maschine mit einem kreis- oder ringförmigen scheibenartigen Läuferkörper und Permanentmagneten, die in Umfangsrichtung benachbart zueinander an dem Läuferkörper angeordnet sind. Insbesondere umfasst der Läuferkörper ein erstes Material zur Ableitung von Wärme in radialer Richtung und umfasst ferner im Bereich der Permanentmagnete ein zweites elektrisch nicht-leitendes Material. Ferner wird, um die Permanentmagnete zuverlässig an dem Trägerelement zu halten, das Trägerelement mit einem umlaufenden Rand versehen, an dem sich die Permanentmagnete nach außen hin abstützen können. Dieser Rand ist genauso wie der Bereich, in dem die Permanentmagnete eingesetzt sind, aus einem thermisch gut leitenden Material, wie beispielsweise Aluminium ausgebildet.

In der Presseaussendung 107/2014 vom 24.10.2014 berichtet die Technische Universität Wien über Elektromotoren, die ohne fehleranfällige Sensorik auskommen. Normalerweise messen bei solchen Elektromotoren mit Magnetlager Sensoren die Position des Magneten, und geben die Daten an eine Steuerungselektronik weiter, die die Elektromagnete kontrolliert. Solche Sensoren bringen jedoch immer wieder dieselben Probleme mit sich.

Die Sensortechnik verursacht Kosten, benötigt Platz und ist immer besonders ausfallkritisch. Dünne Drähte und feine Lötstellen bei den Sensoren fallen leicht aus und sind daher für viele Motorenausfälle verantwortlich. Das Synchronmaschinen-System, das an der TU Wien entwickelt wurde, geht einen anderen Weg. Hier werden die Kabel, die ohnehin vorhanden sind, verwendet, die zur Stromzufuhr zum Elektromagneten dienen. Kurze elektrische Testimpulse werden durch die Leitungen geschickt, und aus der elektrischen Reaktion darauf lässt sich die aktuelle Stellung des Rotors ableiten. Die elektrischen Pulse, die dafür nötig sind, dauern nur einige Millionstelsekunden. Eine entsprechend angelegte Elektronik stellt sich auf die Drehzahl des Motors ein und steuert die Elektromagnete.

In der Presseaussendung 27/2015 der Technischen Universität Wien werden schwebende Rotoren, beispielsweise im Elektromotor dargestellt, wobei eine sensorlose Steuerung von Magnetlagern eingesetzt wird. Berührungsfreie Lager sind besonders dort wichtig, wo Reibungsverluste minimal sein müssen, und wo, wie beispielsweise bei Vakuumpumpen, ein Abrieb unbedingt vermieden werden muss. Auch bei Antriebswellen, die eine besonders hohe Drehzahl erreichen müssen, werden Magnetlager eingesetzt. Die Position des Rotors wird bei Magnetlagern elektronisch fixiert. Elektromagnete, die man zum Nachjustieren der Rotor-Position verwendet, werden gleichzeitig auch als Sensoren eingesetzt. Durch das Magnetfeld sind der Rotor und die elektromagnetische Spule miteinander gekoppelt. Aufgrund der Messung der zeitlichen Veränderung des Stroms, der in der Spule auftritt, kann die Position des Rotors berechnet werden.

Möglicherweise problematisch an solchen Vorgehensweisen ist, dass extra Zusatzsignale verwendet werden müssen, um die Position des Rotors im Magnetlager zu messen. Diese ultrakurzen Testpulse müssen erzeugt werden und ausgewertet werden. Die US 9,694,845 B2 offenbart eine Motorsteuerungseinrichtung, eine Servolenkung und ein Fahrzeug mit einem Redundanz-Konzept für die Servolenkung mit zwei Spulengruppen mit unterschiedlichen Sternpunkten.

Die US 6,392,905 B1 offenbart eine Vorrichtung und eine Schaltung zum Reduzieren eines Batterie-Rippel-Stroms in einem Multi-Inverter-System.

Die Fachveröffentlichung D3: Jia Hongyun et al: "segin and analysis of a bearignless doubly salient permanent magnet machine" offenbart eine lagerlose Permanentmagnetmaschine.

Die Fachveröffentlichung D4: Ilyama Y et al.: "A novel middle-point current-injection type bearingless motor for vibration suppression" offenbart einen lagerlosen Motor für die Vibrationsunterdrückung.

Die DE 102013009776 A1 offenbart ein Motorantriebssystem mit einem bürstenlosen Motor, der Spulen aufweist, die in eine Gruppe A und in eine Gruppe B eingeteilt sind.

Die US 2018/183298 A1 offenbart ein Design für die Entwicklung von verschiedenen lagerlosen Motoren.

Die Aufgabe der vorliegenden Erfindung besteht darin, ein effizienteres und ausfallsichereres Konzept für einen Elektromotor zu schaffen.

Diese Aufgabe wird durch einen Elektromotor nach Patentanspruch 1 oder ein Verfahren zum Herstellen eines Elektromotors nach Patentanspruch 20 oder ein Verfahren zum Betreiben eines Elektromotors nach Patentanspruch 21 gelöst.

Ein Elektromotor gemäß einem Ausführungsbeispiel umfasst einen Rotor und einen Stator. Der Stator hat Polfüße, wobei um die Polfüße Spulen gewickelt sind. Ein Polfuß um fasst einen Kreissektor, der kleiner als ein Kreissektor ist, der von einem Permanentmagnet umfasst ist. Die um die Polfüße gewickelten Spulen sind in zwei Gruppen aufgeteilt. Eine erste Gruppe der Spulen ist über einen ersten Sternpunkt miteinander elektrisch leitend verbunden. Ferner ist eine zweite Gruppe von Spulen über einen zweiten Sternpunkt miteinander elektrisch leitend verbunden, wobei die beiden Sternpunkte voneinander elektrisch isoliert sind.

Ferner ist eine Spule der ersten Gruppe zwischen zwei Spulen der zweiten Gruppe angeordnet. Eine Steuerung ist vorgesehen, um die Spulen der ersten Gruppe von Spulen mit Antriebssignalen zu beaufschlagen, um den Rotor gegenüber dem Stator mit einem Drehmoment zu versehen. Darüber hinaus ist die Steuerung ausgelegt, um wenigstens eine Spule der zweiten Gruppe von Spulen mit einem Steuersignal zu beaufschlagen, das sich von den Antriebssignalen unterscheidet.

Die Ansteuerung der Spulen der zweiten Gruppe von Spulen kann völlig unabhängig von der Ansteuerung der Spulen der ersten Gruppe erfolgen, weil die beiden Gruppen von Spulen aufgrund der Tatsache, dass sie verschiedene Sternpunkte haben, voneinander getrennt sind. Ein Anlegen eines Potenzials an eine Spule der ersten Gruppe, beispielsweise der Gruppe, die in einem bestimmten Zeitintervall zum Antreiben des Motors eingesetzt wird, hat im wesentlichen keine Auswirkung auf eine Spule der zweiten Gruppe von Spulen. Grund ist, dass die beiden Sternpunkte der Gruppen von Spulen voneinander getrennt sind, also voneinander elektrisch isoliert oder je nach Implementierung sogar galvanisch komplett voneinander getrennt sind. Da ferner die Anordnung und die Dimensionierung der Polfüße, um die die Spulen gewickelt sind, so bezüglich der Permanentmagnete ausgebildet sind, dass ein Polfuß einen Kreissektor umfasst, der kleiner als ein Kreissektor des Permanentmagneten ist, wird der Fall auftreten, dass lediglich eine Gruppe der beiden Gruppen von Spulen, also eine Sternpunktgruppe zum Antrieb des Motors benötigt wird.

Die zweite Sternpunktgruppe steht dagegen für beliebige andere Maßnahmen des Motors zur Verfügung. Typischerweise wird eine Gruppe von Spulen, die in einem ersten Zeitintervall die Antriebsspulen waren, in dem zweiten Zeitintervall zu der Gruppe von sogenannten "Mitlaufspulen", die nicht oder nur gering zum Erzeugen eines Drehmoments in dem Elektromotor beitragen. Daher existiert eine große Freiheit bezüglich der Ansteuerung dieser "Mitlaufspulen" in dem Zeitintervall, in dem diese Spulen nicht zum Antreiben des Elektromotors beitragen.

Eine Möglichkeit der Ansteuerung der Mitlaufspulen, also der zweiten Gruppe von Spulen, wenn die erste Gruppe von Spulen in diesem Zeitintervall die Antriebsspulen sind, besteht in einer Drehzahlsteuerung. Es kann nämlich bereits das für das Drehmoment nötige Spannungssignal an der zweiten Gruppe von Spulen während des ersten Zeitintervalls zu einem bestimmten Einschaltzeitpunkt angelegt werden, wobei dieser Einschaltzeitpunkt frei einstellbar ist und dazu führt, dass eine Veränderung des Einschaltzeitpunkts sich unmittelbar auf den Strom auswirkt, der in der Spule fließt, wenn die Spule zum Antrieb beiträgt. Nachdem die beiden Spulengruppen voneinander galvanisch beispielsweise getrennt sind, aufgrund der Tatsache, dass sie verschiedene Sternpunkte haben, ist die Ansteuerung der Spulen mit Spannungen in dem Intervall, in dem die Spulen nicht zum Antrieb beitragen, beliebig einstellbar, trägt jedoch unmittelbar dann, wenn die Spulen dann zum Antrieb beitragen, wenn sie also in der Nähe eines Spalts zwischen zwei Permanentmagneten kommen, zum Antrieb bei. Durch die bereits vorherige Einstellung des Stroms durch eine Spule einfach aufgrund des Einschaltzeitpunkts der an diese Spule angelegten Spannung in dem Zeitintervall, in dem die Spule nur die Mitlaufspule ist, wird die Spule gewissermaßen bereits bereitgemacht, um dann optimal in dem Intervall, in dem sie zum Antrieb des Motors beiträgt, bestromt zu sein.

Ein alternative Möglichkeit der Ansteuerung der Mitlaufspule besteht darin, eine Lageregelung für ein Magnetlager zu schaffen. Wird der Motor nämlich als berührungslos gelagerter Motor mit Magnetlager betrieben, so können die Mitlaufspulen ohne Weiteres zur Lageregelung des Magnetlagers eingesetzt werden. Durch Erfassung der Ströme in den Spulen, die gerade den Motor antreiben, kann auf die Position des Rotors bezüglich des Stators geschlossen werden, um dann ein Steuersignal für die Mitlaufspulen in demselben Zeitintervall oder in dem nächsten Zeitintervall zu erreichen. Nachdem die Mitlaufspulen nicht zum Antrieb beitragen, und zwar aufgrund der Tatsache, dass sie einen anderen Sternpunkt haben als die Antriebsspulen, können sie mit Spannungen/Strömen angesteuert werden, durch die eine Lageregelung erreicht wird, dahin gehend, dass z. B. zwei gegenüberliegende Spulen des Stators mit jeweils einem positiven und einem negativen Referenzpotenzial bzw. einem positiven Potenzial und Masse versehen werden. Damit wird auf den Rotor eine Kraft ausgeübt, weil aufgrund dieser bipolaren Ansteuerung auf der einen Seite eine Anziehung der Mitlaufspule und des ihr gegenüberliegenden Permanentmagneten erzeugt wird, während auf der anderen Seite eine Abstoßung bzw. eine vergleichsweise kleiner Anziehung also auf der gegenüberliegenden Seite zwischen der Mitlaufspule und dem dieser Spule gegenüberliegenden Permanentmagneten erzeugt wird. Dieser erzeugte Kraftvektor führt zu einer Veränderung der Lage des Rotors und zu einer entsprechenden Kompensation einer Lageabweichung des Rotors, um den berührungslos gelagerten Elektromotor zu stabilisieren, also elektronisch zu fixieren.

Weitere Möglichkeiten bzw. Anwendungen der elektrischen Ansteuerung der Mitlaufsputen in dem Intervall, in dem die Mitlaufspulen nicht zum Antrieb des Motors beitragen, können ebenfalls eingesetzt werden und ggf. mit den Anwendungsmöglichkeiten der Drehzahlsteuerung und der Lageregelung kombiniert werden. Auch die Drehzahlsteuerung und die Lageregelung können miteinander im Betrieb kombiniert werden. Wenn z. B. festgestellt wird, dass eine Lageregelung gerade nicht nötig ist, weil der Rotor bezüglich des Stators stabil läuft, kann vom Lageregelungsmodus in den Drehzahlsteuerungsmodus umgeschaltet werden, um z. B. eine angeforderte Drehzahlerhöhung oder Drehzahlreduktion durchzuführen. Aus diversen Gründen kann es auch erforderlich sein, eine absichtliche Lageänderung aus einer optimalen Lage heraus durchzuführen, um z. B. den Motor zu bremsen oder um andere Maßnahmen durchzuführen. Alle diese Maßnahmen können ohne Weiteres an den Mitlaufspulen vorgenommen werden, da eine Bestromung bzw. eine Versorgung der entsprechenden Mitlaufspulen mit Spannungen keine Auswirkung auf die Versorgung der Antriebsspulen der entsprechenden anderen Gruppe von Spulen mit Antriebssignalen hat.

Bevorzugte Ausführungsbeispiele der vorliegenden Erfindung werden nachfolgend Bezug nehmend auf die beiliegenden Zeichnungen detailliert erläutert. Es zeigen:
- Fig. 1: eine schematische Draufsicht auf einen Motor mit außenliegendem Rotor mit Permanentmagneten und innenliegendem Stator mit Spulen;
- Fig. 2A: eine tabellarische Darstellung der Verwendung verschiedener Spulengruppen in verschiedenen Zeitintervallen als Antriebsspulen oder Mitlaufspulen;
- Fig. 2B: eine tabellarische Darstellung der Ansteuerung und Selektion der Antriebsspulen von Fig. 1;
- Fig. 3: eine schematische Darstellung der zueinander angeordneten Spulengruppen mit den unterschiedlichen Sternpunkten 1 und 2;
- Fig. 4: eine elektrische Schaltung für einen Spulenanschluss;

- Fig. 5: eine schematische Darstellung der beiden Sternpunktgruppen und einer entsprechenden Steuerung;
- Fig. 6: eine Darstellung der kompletten Ansteuerung für die vier Antriebsspulen oder die vier Mitlaufspulen bei dem in Fig. 1 gezeigten Ausführungsbeispiel;
- Fig. 7: Zeitdiagramme der für einzelne Spulen gemessenen Ströme zur Veranschaulichung einer Drehzahlsteuerung über den Einschaltzeitpunkt im "neutralen" Intervall;
- Fig. 8: eine Ansteuerung der Antriebsspulen mit einem einzigen Ansteuerpotenzial U_{M};
- Fig. 9: eine Ansteuerung der Mitlaufspulen, um eine Lageregelung in eine entsprechende Richtung zu erreichen;
- Fig. 10: Diagramme von Strömen in Spulen zur Erfassung eines Rotorversatzes;
- Fig. 11: ein Flussdiagramm zur Veranschaulichung der für die Lageregelung durchgeführten Schritte bei einem Ausführungsbeispiel;
- Fig. 12: eine Übersichtsdarstellung für ein Beispiel eines maximalen Motorspalts und der entsprechenden Ansteuerung zur Lageregelung;
- Fig. 13: eine tabellarische Darstellung zur Erfassung der Position des Rotorversatzes und der entsprechenden Ansteuerung zur Lageregelung aufgrund einer zeitlichen Änderung der Spulenströme; und
- Fig. 14: einen schematischen Querschnitt für eine Wärmepumpe mit einem erfindungsgemäßen Elektromotor, der die zwei Sternpunkte aufweist.

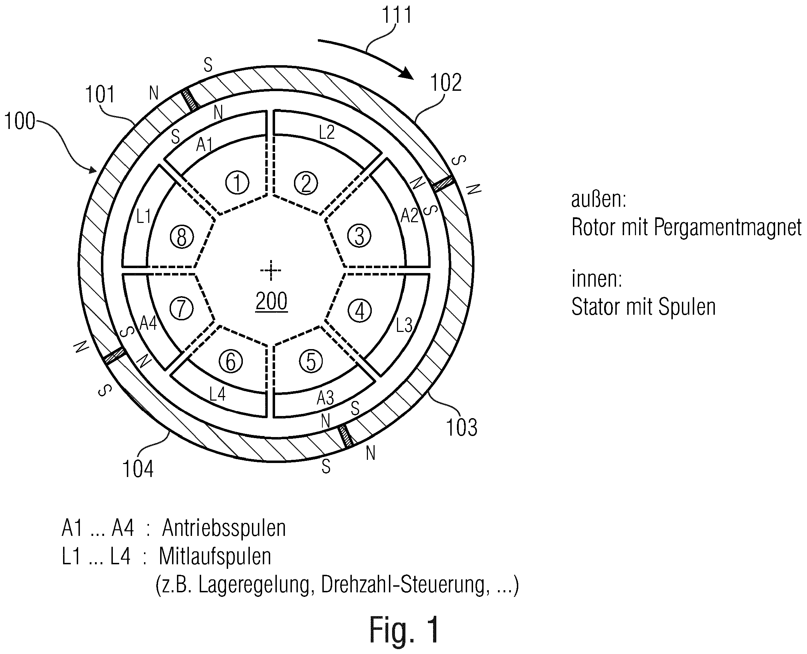

Fig. 1 zeigt eine Draufsicht auf einen Elektromotor. Der Elektromotor umfasst einen Rotor 100, der in Fig. 1 außenliegend angeordnet ist. Damit ist das in Fig. 1 gezeigte Beispiel ein Außenläufer. Genauso ist die vorliegende Erfindung jedoch auch auf einen Innenläufer anwendbar, bei dem der Stator um den Rotor herum angeordnet ist und damit der Rotor innen bezüglich des Stators angeordnet ist. Nachfolgend wird jedoch lediglich beispielhaft die vorliegende Erfindung anhand des Außenläufers dargestellt. Die Erfindung ist jedoch ohne Weiteres auf Innenläufer übertragbar und anwendbar.

Der Rotor 100 umfasst eine erste Anzahl von Permanentmagneten 101, 102, 103, 104, wobei jeder Permanentmagnet einen ersten Kreissektor umfasst. Der Kreissektor bei dem in Fig. 1 gezeigten Ausführungsbeispiel mit vier Permanentmagneten beträgt jeweils 90° bzw. einen Winkel, der etwas kleiner ist, nachdem die Permanentmagnete, wie es in Fig. 1 beispielhaft dargestellt ist, etwas voneinander beabstandet sind und unterschiedlich polarisiert sind, so dass z. B. der Permanentmagnet 102 zum Motorspalt hin einen Nordpol hat, während der Permanentmagnet 101 bzw. 103 zum Motorspalt hin seinen Südpol hat. Obgleich in Fig. 1 ein Rotor mit vier Permanentmagneten gezeigt ist, können ohne Weiteres auch Rotoren mit drei oder mehr als vier Permanentmagneten eingesetzt werden. Es wird bevorzugt, dass jeder Permanentmagnet den im Wesentlichen gleichen Kreissektor umfasst, so dass bei einer Verwendung von drei Permanentmagneten beispielsweise jeder Permanentmagnet 120° bzw. etwas weniger als 120° umfassen würde, während bei der Verwendung von z. B. acht Permanentmagneten jeder Permanentmagnet etwa 45° umfassen würde.

Der Elektromotor umfasst ferner einen Stator 200 mit einer zweiten Anzahl von Polfüßen, die in Fig. 1 gestrichelt dargestellt sind und mit umkreisten Ziffern ①, ②, ③, ④, ⑤, ⑥, ⑦, ⑧ bezeichnet sind, wobei diese umkreisten Ziffern auch die entsprechenden Spulen bezeichnen, die um den Polfuß gewickelt sind. Es existiert eine zweite Anzahl von Polfüßen. Bei dem in Fig. 1 gezeigten Beispiel ist die zweite Anzahl von Polfüßen größer als die erste Anzahl von Permanentmagneten am Rotor. Insbesondere werden acht Polfüße und damit acht Spulen eingesetzt, während vier Permanentmagnete eingesetzt werden. Andere Verhältnisse sind jedoch ebenfalls verwendbar, sofern die Anzahl der Polfü-ße größer als die Anzahl der Permanentmagneten ist. Entsprechend umfasst jeder Polfuß bzw. jede um den entsprechenden Polfuß gewickelte Spule einen zweiten Kreissektor, der kleiner als der erste Kreissektor ist, der von einem Permanentmagneten umfasst wird.

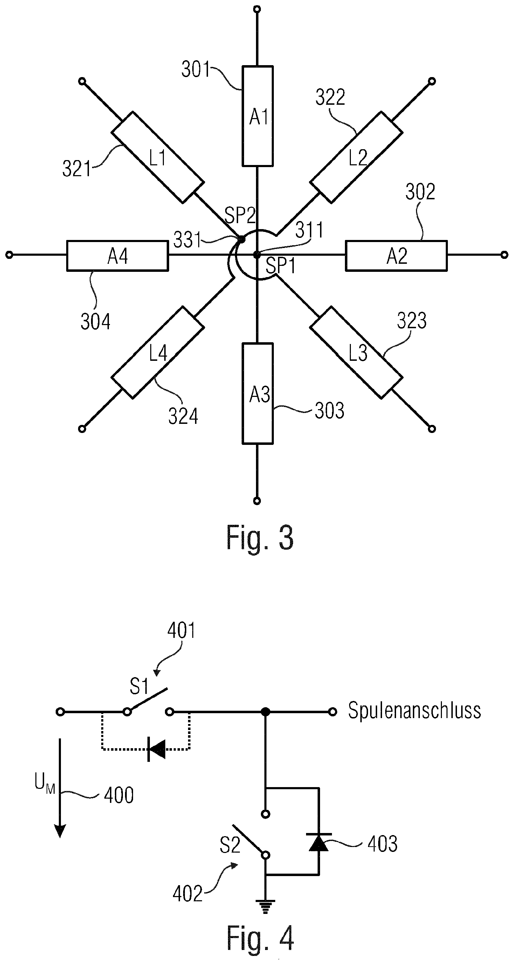

Insbesondere ist eine erste Gruppe von Spulen A1, A2, A3, A4 über einen ersten Sternpunkt elektrisch leitend miteinander verbunden, wie es in Fig. 3 gezeigt ist. Diese erste Gruppe von Spulen wird mit 301, 302, 303, 304 bezeichnet. Der erste Sternpunkt SP1 ist bei 311 gezeigt. Ferner ist eine zweite Gruppe von Spulen L1, L2, L3, L4, die in Fig. 3 auch mit 321, 322, 323, 324 bezeichnet ist, mit einem zweiten Sternpunkt SP2 verbunden, der mit 331 bezeichnet ist. Der zweite Sternpunkt 331 ist von dem ersten Sternpunkt 311 elektrisch isoliert. Ferner ist, wie es in Fig. 3 gezeigt ist, und wie es auch aus Fig. 1 hervorgeht, eine Spule der ersten Gruppe von Spulen zwischen zwei Spulen der zweiten Gruppe von Spulen angeordnet.

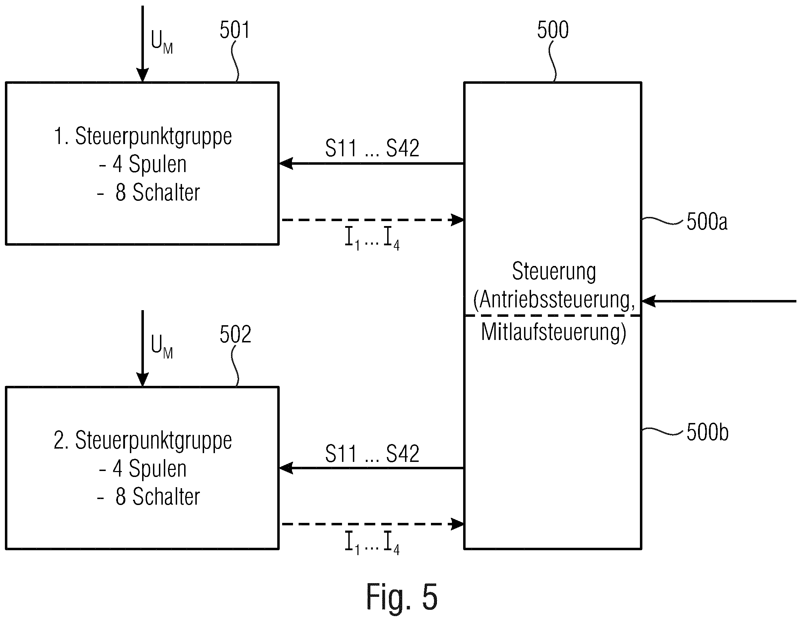

Darüber hinaus ist eine Steuerung 500, die in Fig. 5 gezeigt ist, vorgesehen, um zum einen die Spulen der ersten Gruppe von Spulen, also die Antriebsspulen, mit Antriebssignaten zu versehen, um den Rotor gegenüber dem Stator mit einem Drehmoment zu versehen. Der Steuerung 500 umfasst ferner eine Funktionalität zur Durchführung der Mitlaufsteuerung, also um wenigstens eine Spule der zweiten Gruppe von Spulen, die nicht zum Antrieb des Motors beitragen, mit einem Steuersignal zu versehen, welches sich von einem Antriebssignal unterscheidet. Das Steuersignal, das an eine Spule der zweiten Gruppe von Spulen anlegbar ist, ist beispielsweise ein Steuersignal zum Öffnen eines Schalters, um ein Referenzpotenzial, das z. B. im vorherigen Zeitintervall angelegt worden ist, abzuklemmen. Alternativ kann das Steuersignal ein Anlegen eines Steuersignals an einen Schalter sein, um einen Anschluss einer Spule, der nicht mit dem Sternpunkt verbunden ist, zu erden. Alternativ kann das Steuersignal auch ein Steuersignal an einen Schalter sein, um ein Referenzpotenzial, das vorher nicht an einer Spule angelegt worden ist, anzulegen. Das Steuersignal kann jedoch auch sowohl für die Antriebsspulen als auch für die Mitlaufspulen eine Spannung an einer oder mehreren Spulen oder ein Strom durch eine Spule oder Ströme durch mehrere Spulen umfassen.

Vorzugsweise wird zur Drehzahlsteuerung ein Referenzpotenzial zu einem bestimmten Zeitpunkt angelegt, auf dessen Basis dann bei bekanntem Stromanstieg zu Beginn des nächsten Intervalls, zu dem die Mitlaufspule wieder eine Antriebsspule wird, ein bestimmter Strom durch die Spule fließt. Wird der Einschaltzeitpunkt früher gewählt, so ist die Zeit des Anstiegs, bis zu dem die Spule dann wieder die Antriebsspule wird, größer, und der Strom wird höher sein, um die Drehzahl zu erhöhen. Wird der Einschaltzeitpunkt jedoch in dem Zeitintervall, in dem die Spule nicht die Antriebsspule ist, später gewählt, so wird der Strom kleiner sein und es wird allmählich zu einer Drehzahlverringerung kommen.

Bei alternativen Ausführungsbeispielen ist das Beaufschlagen wenigstens einer Spule der zweiten Gruppe von Spulen mit einem Steuersignal eine Steuerung zur Lageregelung. Hier kann an einer bestimmten Spule der z. B. vier Spulen der zweiten Gruppe von Sputen ein Signal so einen Schalter steuern, dass an die Spule ein Referenzpotenzial angelegt wird, während an eine gegenüberliegend angeordnete Spule z. B. ein Massepotenzial oder ein negatives Referenzpotenzial angelegt wird. Damit wird auf den Rotor eine Kraft ausgeübt, um den Rotor dahin gehend lagemäßig zu verändern, dass ein Versatz des Rotors bezüglich des Stators bzw. ein ungleichmäßig großer Motorspalt vergleichmäßigt wird bzw. der Versatz kompensiert bzw. eliminiert wird.

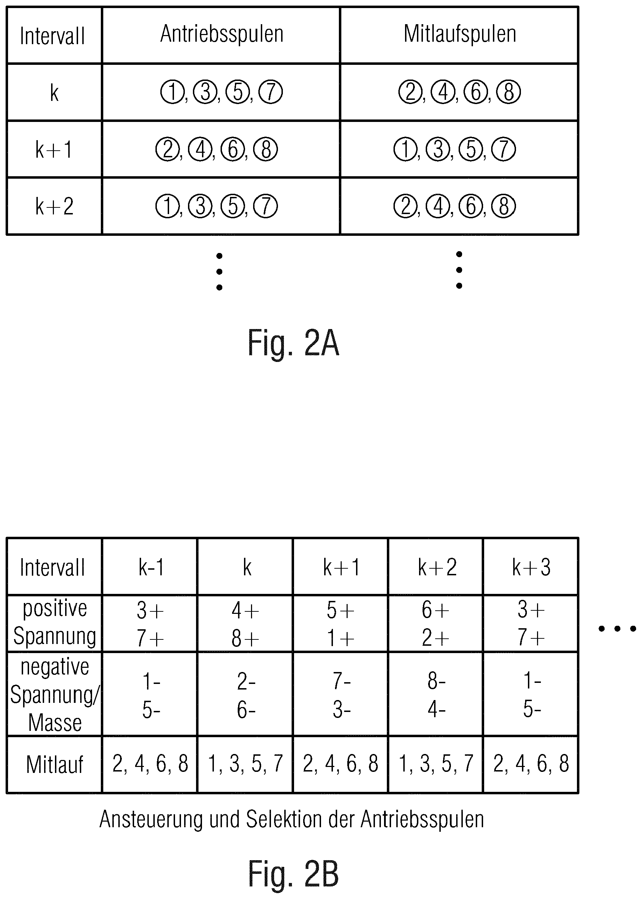

Fig. 2A zeigt eine tabellarische Darstellung zur Illustration, welche Spulen zu einem Intervall die Antriebsspulen sind und welche Spulen die Mitlaufspulen sind. Bei dem in Fig. 1 gezeigten Zustand des Rotors 100 bezüglich des Stators 200 ist die erste Gruppe von Spulen A1, A3, A2, A4, die auch mit 1, 3, 5, 7 bezeichnet sind, die Gruppe von Antriebsspulen, weil die Spulen jeweils einer Grenze zwischen zwei entgegengesetzt polarisierten Permanentmagneten gegenüberliegen. Dagegen spürt die zweite Gruppe von Spulen L2, L3, L4, L1, die auch mit 2, 4, 6, 8 bezeichnet sind, keine Magnetfeldänderung. Damit trägt diese Gruppe von Spulen nicht zum Antrieb bei. Dies gilt für das Intervall k. Für das Zeitintervall k+1 hat dann der Rotor eine gewisse Drehung erreicht, so dass die Grenze zwischen zwei entgegengesetzt polarisierten Permanentmagneten nicht mehr der Spule A2 gegenüberliegt, sondern der Spule L3 gegenüberliegt. Damit wird die Spule L3 zur Antriebsspule und die Spule A2 und die Spule A3 werden dann in diesem Zeitintervall zur Mitlaufspule. Dies ist in der zweiten Zeile der Tabelle von Fig. 2A dargestellt. Hat sich der Rotor dann derart weitergedreht, dass der Rotor so angeordnet ist, dass der Übergang zwischen zwei entgegengesetzt polarisierten Permanentmagneten wieder der Antriebsspule A3 beispielsweise gegenüberliegt, so ist wieder die erste Gruppe von Spulen die Gruppe von Antriebsspulen und die zweite Gruppe von Spulen die Mitlaufspulen. Dies ist beim Intervall k+2 gezeigt. Ein Intervall hat daher bei dem in Fig. 2A gezeigten Ausführungsbeispiel eine zeitliche Länge, die ein Viertel der zeitlichen Länge ist, die ein gesamter Umlauf des Rotors um den Stator braucht.

Fig. 2B zeigt eine tabellarische Zusammenstellung der Ansteuerung und Selektion der Antriebsspulen. Beispielsweise sind im Intervall k-1 die Spulen 3, 7 positiv angeschlossen und die Spulen 1, 5 auf einer negativen Spannung bzw. auf Masse. Im Intervall k sind dann die Spulen 4, 8 positiv und die Spulen 2, 6 auf einer negativen Spannung oder auf Masse. Dann, im darauffolgenden Intervall k+1 sind die Spulen 5, 1 positiv und die Spulen 7, 3 negativ bzw. auf Masse. Im wieder darauffolgenden Intervall k+2 sind die Spulen 6, 2 positiv und die Spulen 8, 4 negativ, und im Intervall k+3 sind die Spulen 3, 7 positiv und die Spulen 1, 5 negativ bzw. auf Masse. In der letzten Zeile der Tabelle in Fig. 2B sind jeweils die Mitlaufspulen gezeigt, deren Ansteuersignale beliebig wählbar sind, weil sie aufgrund der unterschiedlichen Sternpunkte für die Spulengruppen nicht die jeweils andere Spulengruppe beeinflussen. Im Intervall k+4 herrscht wieder dieselbe Situation wie im Intervall k, und so weiter. Damit wird erreicht, dass sich der Rotor bezüglich des Stators dreht, wie es für solche Drehfeldmaschinen bekannt ist.

Fig. 3 zeigt die Anordnung der Spulen der verschiedenen Gruppen dahin gehend, dass immer eine Spule der eine Gruppe zwischen zwei Spulen der anderen Gruppe angeordnet ist. Fig. 4 zeigt ein Ausführungsbeispiel für ein Schalterelement, das zur Steuerung einer Spule einsetzbar ist. Es kann ein Steuerpotenzial 400, das mit Uₙ bezeichnet ist, zwischen einem positiven Anschluss und einem Masseanschluss angelegt werden. Darüber hinaus existiert ein erster Schalter S1, der mit 401 bezeichnet wird, und ein zweiter Schalter S2, der mit 402 bezeichnet ist. Darüber hinaus kann bei einem bevorzugten Ausführungsbeispiel der Schalter S2 beispielsweise mit einer Freilaufdiode 403 überbrückt sein. Eine entsprechende Freilaufdiode, die in Fig. 4 gestrichelt gezeigt ist, kann auch den Schalter S1 überbrücken, dahin gehend, dass die Sperrrichtung der Diode so ist, wie es in Fig. 4 gestrichelt eingezeichnet ist.

Das Schaltelement, das in Fig. 4 gezeichnet ist, ist vorzugsweise an jedem Spulenanschluss in Fig 3 angeordnet, wobei jeweils vorzugsweise jeder Spulenanschluss der ersten Gruppe ein eigenes Referenzpotenzial hat und damit auch ein eigenes Massepotenzial hat, dahin gehend, dass insgesamt für jede Sternpunktgruppe ein eigenes Referenzpotenzial und ein eigenes Massepotenzial vorhanden ist. Damit ergibt sich, wie es in Fig. 5 gezeigt ist, schematisch eine erste Sternpunktgruppe 501 mit vier Spulen und acht Schaltern und eine zweite Sternpunktgruppe 502 mit wiederum vier Spulen und vier Schaltern, welche alle von der Steuerung 500 angesteuert werden. Insbesondere ist die Steuerung 500 ausgebildet, um sämtliche Steuersignale für die entsprechenden Schalter S1, S2 für jeden Spulenanschluss zu liefern.

Ferner ist, insbesondere dann, wenn die Mitlaufspulen jeweils für die Lageregelung verwendet werden, jede Sternpunktgruppe mit entsprechenden Stromsensoren versehen, um immer die Ströme in den Spulen der Antriebsgruppe zu erfassen und abhängig von den erfassten Strömen dann entweder im selben Zeitintervall oder im nächsten Zeitintervall die Lageregelungssignale, die wiederum Steuersignale an entsprechende Schalter sind, zu ermitteln und zu übertragen.

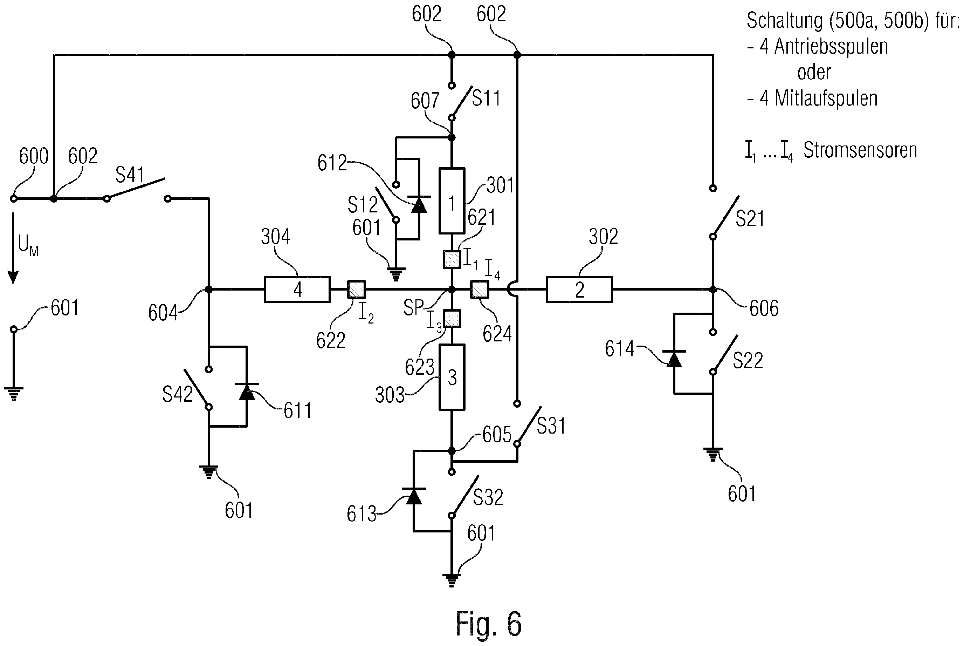

Fig. 6 zeigt eine komplette Schaltung mit Spulen 301, 302, 303, 304 und Schaltergruppen S11, S12 für die erste Spule 301, S21, S22 für die zweite Spule 302, S31, S32 für die dritte Spule 303 und S41, S42 für die vierte Spule 304. Insbesondere wird es bevorzugt nur ein einziges Referenzpotenzial U_{M} zu verwenden. Dieses Referenzpotenzial liegt zwischen einem Anschluss 600 und einem Masseanschluss 601 an. An einem ersten Knoten 602 ist sowohl der Schalter S41 für die vierte Spule 304, der Schalter S11 für die erste Spule 301, der Schalter S21 für die zweite Spule 302 und der Schalter S31 für die dritte Spule 303 angeschlossen. Dieser Knoten 602 ist aus Übersichtlichkeitsgründen mehrfach in Fig. 6 gezeichnet. Darüber hinaus ist in einem Zwischenknoten, der mit 604 gezeichnet ist, der jeweilige zweite Schalter angebracht, wie es z. B. bei 604 für S42 gezeigt ist. Am Zwischenknoten 605 ist der zweite Schalter S32 angebracht, und zwar zwischen diesem Zwischenknoten 605 und dem Massepotenzial 601. Darüber hinaus ist auch der Schalter S22 an einem weiteren Zwischenknoten 606 angebracht, und zwar zwischen diesem Zwischenknoten und der Masse. Darüber hinaus ist auch der Schalter S12 zwischen einem Zwischenknoten 607 und dem Massepotenzial 601 geschaltet. Jede Spule hat somit an dem Anschluss, der nicht mit dem Sternpunkt SP verbunden ist, sowohl einen Schalter zum Bezugspotenzial als auch einen weiteren Schalter zum Massepotenzial, wobei der jeweilige Zwischenknoten, wie beispielsweise der Zwischenknoten 604, 605, 606, 607 genau dieser Spulenanschluss ist, der jeweils nicht mit dem Sternpunkt verbunden ist. Darüber hinaus umfasst vorzugsweise wenigstens jeder zweite Schalter, wie beispielsweise S12, S22, S32, S42 eine Freilaufdiode 611, 612, 613 bzw. 614. Außerdem ist für jede Spule ein Stromsensor vorgesehen, der mit 621 für die erste Spule bezeichnet ist, mit 622 für die zweite Spule, mit 623 für die dritte Spule und mit 624 für die vierte Spule bezeichnet ist.

Jeder Stromsensor misst einen Strom durch die entsprechende Spule, also 11, I2, I3, I4. Als Stromsensor kann z. B. ein Widerstand eingesetzt werden, der eine bekannte Größe hat, wobei dann die an diesem Widerstand abfallende Spannung gemessen wird, um den Strom zu erfassen. Alternativ kann auch ein Hall-Stromelement oder irgendetwas Ähnliches vorgesehen werden.

Die in Fig. 6 gezeigte Schaltung wird vorzugsweise genau gleich sowohl für die erste Sternpunktgruppe 501 als auch für die zweite Sternpunktgruppe 502 ausgeführt, wobei jedoch vorzugsweise unterschiedliche Spannungsquellen zum Liefern der Referenzspannung U_{M} zwischen den Anschlüssen 600 und 601 eingesetzt werden, und wobei vorzugsweise sogar galvanisch getrennte Massepotenziale eingesetzt werden, und wobei jedoch zumindest die beiden Sternpunkte der beiden Schaltungen voneinander elektrisch isoliert sind. Isolationswiderstände von beispielsweise 1 kΩ können bei bestimmten Ausführungen bereits ausreichen. Es werden jedoch wesentlich höhere Isolationswiderstände im Bereich von größer als 10 MΩ oder sogar 100 MΩ bevorzugt, um eine echte galvanische Trennung zwischen den beiden Sternpunktgruppen zu erreichen, derart, dass möglichst wenig Beeinflussung zwischen der Antriebssteuerung durch eine erste Sternpunktgruppe und die Mitlaufsteuerung durch die zweite Sternpunktgruppe stattfindet.

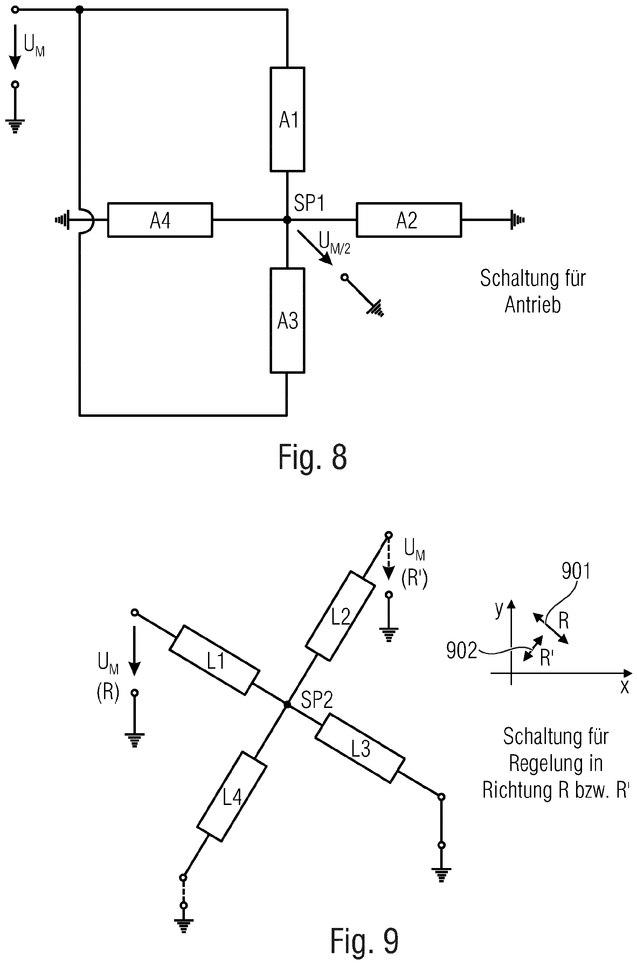

Fig. 8 zeigt eine bevorzugte Schaltung der ersten Sternpunktgruppe für den Antrieb. Insbesondere sind die Spulen A1, A2, A3, A4 so verschaltet, wie es in Fig. 8 gezeigt ist. Damit liegt an den Spulen A1, A3 eine Spannung an, die gleich der Referenzspannung U_{M/2} ist. Darüber hinaus liegt an den beiden anderen Spulen A4, A2 eine Spannung an, die gleich der negativen halben Referenzspannung U_{M/2} ist. Darüber hinaus liegt der Sternpunkt SP1 auf einem Potenzial U_{M/2} bezüglich der Masse.

Im Hinblick auf die Schaltersteuerung bedeutet die in Fig. 8 gezeigte beispielhafte Schaltung für den Antrieb für ein bestimmtes Intervall, nämlich für das Intervall k+1 von Fig. 2B folgendermaßen. Der Schalter S41 ist offen und der Schalter S42 ist geschlossen. Dagegen ist der Schalter S11 von Fig. 6 geschlossen, während der Schalter S12 offen ist. Darüber hinaus ist der Schalter S31 von Fig. 6 geschlossen, während der Schalter S32 offen ist. Darüber hinaus ist der Schalter S22 geschlossen, während der Schalter S21 offen ist. Damit ergibt sich die Spannungssituation des Intervalls k+1 von Fig. 2B um eine Antriebssteuerung zu erreichen.

Fig. 9 zeigt dagegen eine beispielhafte Schaltung für eine Regelung in der Richtung R in dem oben in Fig. 9 gezeichneten schematischen Koordinatensystem. Die Regelung entlang der Richtung R stellt eine Regelung in negativer x- bzw. positiver x-Richtung und in negativer y- bzw. positiver y-Richtung dar, wie es durch den Pfeil 901 dargestellt ist. Hierzu wird eine der beiden Spulen L1, L3 mit der Masse verbunden, während die jeweils andere Spule mit dem Referenzpotenzial U_{M} verbunden wird. Die beiden anderen Spulen L2, L4 sind dann, wenn entlang der Richtung 901 geregelt werden soll, offen. Wenn man hier wiederum die Schaltung in Fig. 6 betrachtet, so bedeutet dies, dass, um die Spule L1 auf das Referenzpotenzial zu legen, der Schalter S11 und der Schalter S12 offen sind. Darüber hinaus ist der Schalter S31 für die Spule L3 offen und der Schalter S32 ist geschlossen. Damit liegt das gesamte Potenzial U_{M} an den Spulen L1, L3 an, und es wird, wenn gleichzeitig die Spulen L2, L4 nicht angesteuert werden, eine Kraft in Richtung des Pfeils R 901 ausgeübt. Um die Spulen L2, L4 entsprechend zu schalten, sind vorzugsweise sämtliche Schalter S41, S42 und S21, S22 komplett offen, so dass die Zwischenknoten 604, 602 floatend sind.

Um alternativ eine Regelung in Richtung des Pfeils R'902 zu erreichen, müssen die beiden Spulen L2, L4 zwischen dem Referenzpotenzial U_{M} und Masse liegen, während die beiden Spulen L1, L3 floaten. Hierzu wären die Schalter S21, S42 zu schließen und die Schalter S22, S41 zu öffnen. Dasselbe gilt auch für die Schalter S12, S11, S32, S31, die ebenfalls geöffnet werden würden, um die Spulen L1 und L3 in den floatenden Zustand zu bringen.

Wird es dagegen bevorzugt, eine Steuerung entlang einer anderen Richtung als der Richtung 901, 902 zu erreichen, so wird es bevorzugt, die Spannung sowohl an L1 und L2 anzulegen und L3 und L4 auf Masse zu legen. Dann würde eine Kraft auf den Rotor ausgeübt werden, die entlang der x- bzw. y-Achse des Diagramms in Fig. 9 ist. Da jede Richtung durch eine entsprechende Kombination von zwei orthogonalen Richtungen im Sinne eines Kräfteparallelogramms eingestellt werden kann, ist damit je nach Implementierung eine Regelung in jeder Richtung qualitativ aber auch sogar quantitativ möglich.

Um beispielsweise die Spulen L1, L2 mit dem Referenzpotenzial zu verbinden, wären die Schalter S11, S21 zu schließen und die Schalter S12, S22 zu öffnen. Dagegen wären die Schalter S41, S31 zu öffnen und die Schalter S42, S32 zu schließen.

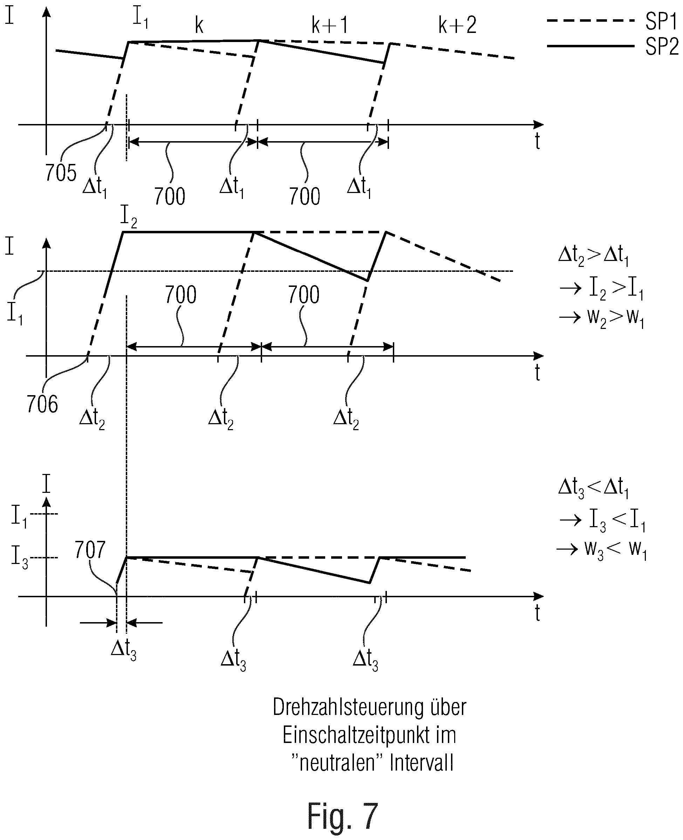

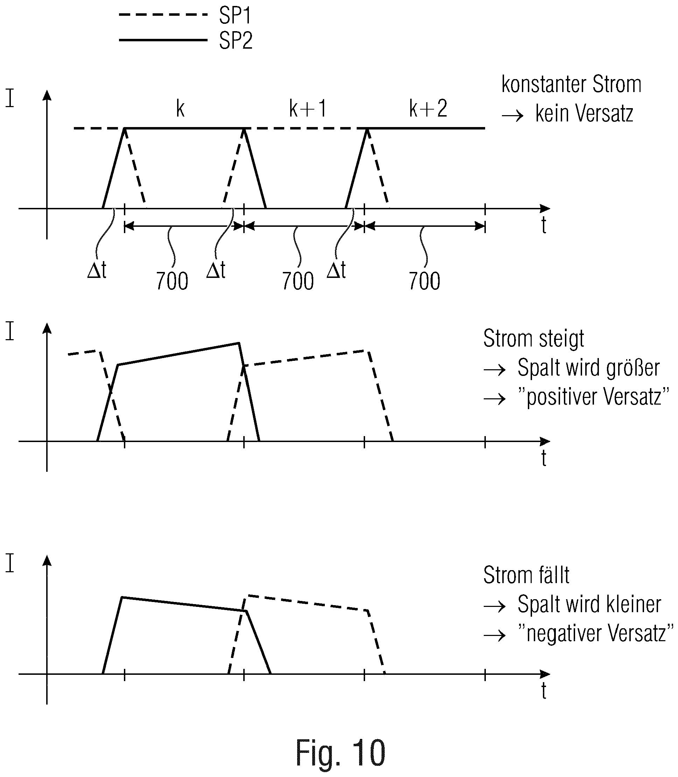

Nachfolgend wird anhand von Fig. 7 eine erste Ausführungsform zur Steuerung der Drehzahl des Motors über den Einschaltzeitpunkt dargestellt. Die Intervalle sind jeweils in Fig. 7 bei 700 dargestellt. Darüber hinaus zeigt die jeweilige Ordinatenachse in den Zeitdiagrammen in Fig. 7 jeweils den Strom durch eine Spule. Insbesondere ist ferner der Stromverlauf einer Spule zu sehen, die im ersten Intervall k im Antriebsmodus ist, also zu der ersten Sternpunktgruppe gehört, die jedoch dann im zweiten Intervall k+1 zur zweiten Sternpunktgruppe gehört und damit eine Mitlaufspule ist. Ferner ist in Fig. 7 im obersten Diagramm eine Situation gezeigt, bei der die gestrichelt dargestellte Linie jeweils den Stromverlauf einer anderen Spule darstellt, die jeweils in der anderen Gruppe ist. Damit zeigt sich, dass im Intervall k der durchgezogene Stromverlauf der Stromverlauf einer Antriebsspule ist und der gestrichelte Stromverlauf ein abnehmender Stromverlauf einer Mitlaufspule ist. Da die Mitlaufspule keinen Einfluss auf den Antrieb hat, ist es unproblematisch, dass der Strom in dem Intervall k leicht abfällt. Genauso könnte der Strom auch komplett abfallen, wie es nachfolgend noch Bezug nehmend auf Fig. 10 dargestellt wird. Wenn der Strom jedoch leicht abfällt, wird dies z. B. dadurch erreicht, dass bestimmte Schalterstellungen der Schalter, wie sie anhand von Fig. 6 dargestellt worden sind, eingestellt werden. Auf jeden Fall ist jede Spule mit einer entsprechenden Induktivität L versehen. Darüber hinaus ist der Zusammenhang zwischen Spannung und Strom an einer Spule so, dass die Spannung an der Spule gleich dem Produkt der Induktivität der Spule und der Ableitung des Stroms durch die Spule mit der Zeit ist. Wenn eine Spule daher gerade als Mitlaufspule fungiert, so wird bei Anlegen einer Spannung zu einem bestimmten Zeitpunkt 705 der Strom konstant ansteigen, wie es durch die gepunktete Linie in Fig. 7 dargestellt ist, und zwar mit einer konstanten Anstiegsrate, da die Induktivität der Spule konstant ist. Es wird also zum Zeitpunkt 705 kurz vor Beginn des Intervalls k durch entsprechende Stellung der Schalter, wie es in Fig. 6 dargelegt worden ist, an die in Fig. 7 im ersten Zeitdiagramm betrachtete Spule eine Spannung angelegt, woraufhin der Strom ansteigt, und zwar bis zu seinem Wert I₁.

Der Zeitpunkt beim Stromwert I₁ bestimmt den Beginn des Intervalls k, was bedeutet, dass die betrachtete Spule von der Mitlaufspule zur Antriebsspule wird. Aufgrund dieser Tatsache findet eine Gegeninduktion statt, und der Strom I₁ steigt nicht weiter an, sondern bleibt so lange konstant, wie diese Spule zum Antrieb beiträgt. Dann am Ende des Intervalls k trägt die Spule nicht mehr zum Antriebssignal bei, sondern wird wieder eine Mitlaufspule, und der Strom durch die Spule in diesem Intervall spielt keine besonders große Rolle, er kann daher z. B. leicht abfallen, wie es durch die durchgezogene Linie im Intervall k+1 dargestellt ist.

Die Situation in Fig. 7 wird erreicht, wenn das Zeitintervall Δt₁ zwischen dem Einschaltzeitpunkt 705 und dem Beginn des Intervalls k bzw. k+1 einen entsprechenden Wert hat. Damit wird ein bestimmter Strom I₁ erreicht, der eine bestimmte Größe hat. Wird nunmehr jedoch, wie es in Fig. 7 im zweiten Diagramm gezeigt ist, der Einschaltzeitpunkt 706 gewählt, der bezüglich des Einschaltzeitpunkts 705 früher ist, so wird das Einschaltzeitintervall Δt₂ größer. Aufgrund des konstanten Anstiegs des Stroms in einer Spule, wenn die Spule gerade eine Mitlaufspule ist, wird nunmehr ein maximaler Strom I₂ erreicht. Dieser maximale Strom I₂ steigt nicht weiter an, wenn der Rotor sich so weit bewegt hat, dass die betrachtete Spule keine Mitlaufspule mehr ist, sondern eine Antriebsspule ist, die zum Antrieb beiträgt.

Der Strom I₂ bleibt so lange konstant, bis vom Intervall k ins Intervall k+1 übergegangen wird. Zu diesem Zeitpunkt wird mittels eines Steuersignals oder mehrerer Steuersignale die Schaltung in Fig. 6 angesteuert, um auf welche Art auch immer das Referenzpotenzial abzuklemmen, damit der Strom nicht weiter ansteigt, sondern z. B. fällt, wie es in Fig. 7 gezeigt ist. Gleichzeitig wird eine andere Spule, die im Intervall k die Mitlaufspule war, wieder mit dem größeren Zeitintervall Δt₂ eingeschaltet, um den Strom I₂ zu erreichen, wenn das Intervall k+1 beginnt usw. Daraus ergibt sich, dass das Einschaltintervall Δt₂, das größer als Δt₁ gewählt wird, dazu führt, dass der Strom in der Spule, wenn die Spule zur Antriebsspule wird, größer wird. Damit wird, weil der Strom proportional zur Drehzahl ist, eine größere Drehzahl erreicht, so dass die Drehzahl Ω₂ bei größerem Zeitintervall Δt₂ größer als die Drehzahl Ω₁ ist, wenn das Zeitintervall Δt₁ kleiner ist.

Analog kann genauso auch eine Drehzahlverringerung erreicht werden, wenn nämlich der Einschaltzeitpunkt 707 näher an die Intervallgrenze hingeschoben wird als der Einschaltzeitpunkt 705. Damit wird der erreichte Strom in der Spule dann, wenn die Spule zur Antriebsspule wird, auf den Wert I₃ verringert, der kleiner als I₁ ist. Damit wird eine Drehzahl erreicht, die kleiner als die Drehzahl Ω₁ ist, die bei der Situation im oberen Diagramm von Fig. 7 erreicht wird.

Daraus wird ersichtlich, dass allein durch die Wahl des Einschaltzeitpunkts unter Berücksichtigung des linearen Anstiegs des Stroms aufgrund der konstanten Induktivität der Spule und aufgrund der konstanten angelegten Spannung eine Drehzahlsteuerung erreicht werden kann, wobei jedoch sämtliche Schaltmaßnahmen an den Mitlaufspulen vorgenommen werden. Damit wird vermieden, dass eine entsprechende Unruhe in den Lauf des Motors gebracht wird, weil der Motor aufgrund der Tatsache, dass die Antriebsspulen bereits in den entsprechenden Zeitintervallen, wo die Antriebsspulen selbst noch Mitlaufspulen sind, bereits für den richtigen Zustand "präpariert" werden, besonders ruhig läuft. Der Elektromotor sieht daher keinerlei An- und Abfälle des Stroms durch die Spulen, die einen unruhigen Lauf verursachen würden, sondern der Elektromotor sieht lediglich konstante Ströme von einem Intervall zum nächsten, jedoch immer abwechselnd von einer Spule der ersten Sternpunktgruppe oder einer Spule der zweiten Sternpunktgruppe.

Alternativ oder zusätzlich kann jedoch die Tatsache, dass es zwei verschiedene Sternpunktgruppen gibt und damit Antriebsspulen und Mitlaufspulen gibt, auch zur Lageregelung eines Magnetlagers verwendet werden. Dies ist schematisch in Fig. 10 dargestellt. Fig. 10 zeigt wieder Intervalle k, k+1, k+2, wobei wiederum der durchgezogene Verlauf ein Verlauf einer Spule der zweiten Sternpunktgruppe ist und der gestrichelte Verlauf der Stromverlauf einer Spule der ersten Sternpunktgruppe ist. Bei dem in Fig. 10 gezeigten obersten Stromverlauf ist die Situation so, dass der Rotor bezüglich des Stators perfekt ausgerichtet ist und der Motorspalt für die betrachtete Spule über eine gesamte Umdrehung konstant ist. Daher ist der Strom I in einer Spule dann, wenn die Spule die Antriebsspule ist, konstant. Ein konstanter Strom deutet darauf hin, dass kein Versatz besteht. Dann, wenn die Antriebsspule zur Mitlaufspule wird, wie beispielsweise im Intervall k+1 für die Spule der zweiten Sternpunktgruppe SP2, kann der Strom beispielsweise auch, im Unterschied zu der in Fig. 7 gezeigten Ausführungsform, komplett auf null gebracht werden. Dies könnte beispielsweise dadurch erreicht werden, dass der Anschluss der Spule, also der Zwischenknoten, beispielsweise 604, 605, 606, 607 von Fig. 6 der jeweiligen Spule durch den entsprechenden Schalter S42, S32, S22, S12 auf Masse gelegt wird. Dann würde sich die Spule entladen und der Strom würde abfallen, wie es in Fig. 10 dargestellt ist. Zu einem entsprechenden Einschaltzeitpunkt kann dann wieder eingeschaltet werden, wobei dieser Einschaltzeitpunkt z. B. gewählt werden kann, wie es in Fig. 7 erläutert worden ist, wenn bestimmte Drehzahlerhöhungen oder Drehzahlerniedrigungen stattfinden sollen. Wenn die Drehzahl jedoch gleichbleiben soll, würde der Einschaltzeitpunkt immer das entsprechende Intervall Δt vor der Intervallgrenze gewählt werden.

Würde jedoch durch einen Stromsensor ein Verlauf wie in der zweiten Darstellung von Fig. 10 gemessen, bei dem der Strom im Intervall zunimmt, so bedeutet dies, dass der Motorspalt, den die betrachtete Spule "sieht", im Laufe der Umdrehung des Rotors um die betrachtete Spule größer wird, dass also gewissermaßen ein "positiver Versatz" existiert. Dies bedeutet, dass der Rotor und der Stator nicht exakt dieselbe Mittelachse haben, sondern dass die Mittelachsen der beiden Motorelemente versetzt sind. Insbesondere deutet, wie es bereits gesagt worden ist, der zunehmende Strom auf einen größer werdenden Spalt hin.

Dagegen deutet, wie es in Fig. 10 dargestellt ist, ein fallender Strom über dem Intervall auf einen kleiner werdenden Spalt hin, den die betrachtete Spule bei der Drehung des Rotors an der Spule vorbei "sieht", was wiederum einen negativen Versatz bedeutet.

Die Auswertung dieser Ströme wird vorzugsweise dazu verwendet, um festzustellen, ob überhaupt ein Versatz besteht, und in welcher Richtung der Versatz existiert, um durch entsprechende Ansteuerung der Mitlaufspulen im gleichen Intervall, in dem auch die Messung stattfindet, bzw. im nächsten Intervall, also in dem Intervall, das auf das Intervall der Messung folgt, eine entsprechende Lageregelung zu erzeugen.

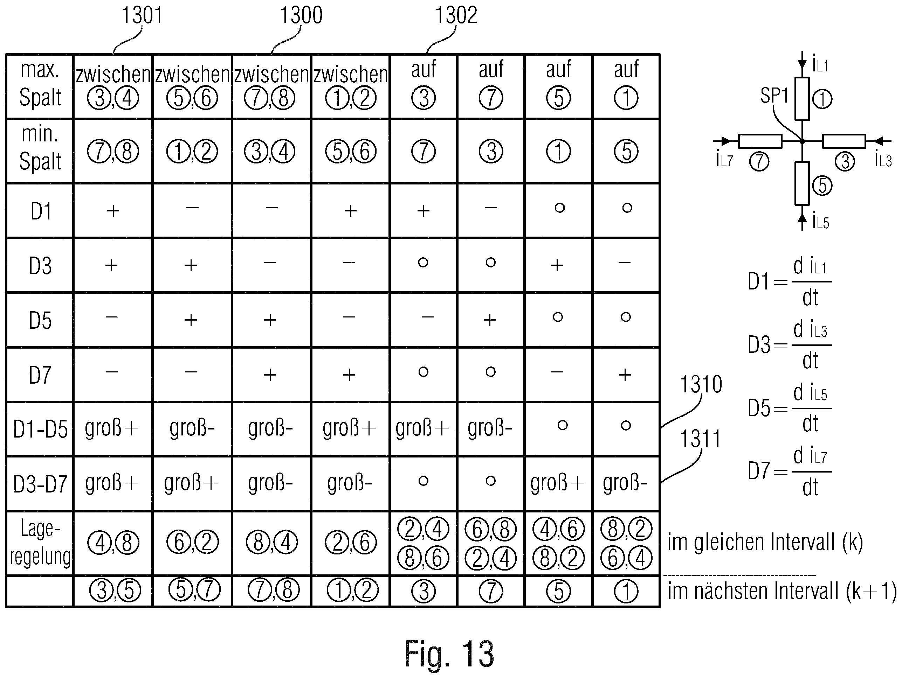

Hierzu wird auf Fig. 13 Bezug genommen. Fig. 13 zeigt eine Tabelle mit verschiedenen Spaltpositionen, insbesondere einer Position eines maximalen Spalts und eines minimalen Spalts. Ferner sind zur Darstellung der Nomenklatur die Antriebsspulen 1, 3, 5, 7 in Fig. 13 dargestellt, die den Antriebsspulen derselben Nummern in Fig. 1 in etwa entsprechen. Darüber hinaus sind Ströme i_{L1}, i_{L3}, i_{L5} und i_{L7} durch die Spulen dargestellt. Ferner enthält die Tabelle die Ableitungen dieser Ströme D1, D3, D5, D7 nach der Zeit, und zwar im Hinblick auf eine qualitative Ausbildung, also ob die Änderung des Stroms positiv ist, was auf einen größer werdenden Spalt hinweist oder ob die Änderung negativ ist, was auf einen kleiner werdenden Spalt hinweist, oder ob die Änderung insgesamt betrachtet gleich null ist, was auf eine optimale Ausrichtung hinweist oder aber darauf, dass in diesem Intervall sowohl eine Zunahme als auch eine Abnahme des Stroms stattfindet, also die Ableitung im Mittel betrachtet gleich null oder sehr klein ist.

Es sei darauf hingewiesen, dass die Ableitung beliebig berechnet werden kann, solange eine aktuelle oder mittlere Änderung des Stroms über der Zeit berechnet wird. Die Ableitung könnte daher beispielsweise auch lediglich durch Bilden einer Differenz von zwei Stromwerten im Intervall berechnet werden. Dies ist je nach Implementierung bereits ausreichend, weil die entsprechende Auswertung, wie die Lageregelung vorgenommen wird, ohnehin bei dem in Fig. 13 gezeigten Ausführungsbeispiel qualitativ stattfindet.

Wird beispielsweise festgestellt, dass die Ableitungen D1, D3 positiv sind und die Ableitungen D5, D7 negativ sind, so würde eine Differenz aus D1 und D5 zu einem großen positiven Wert führen und würde eine Differenz zwischen D3 und D7 zu einem großen Wert führen. Wenn diese beiden Kombinationsgrößen, also die Differenz aus D1 und D5 einerseits und die Differenz aus D3 und D7 andererseits beide große Werte ergeben, so bedeutet dies, dass der maximale Spalt zwischen den Spulen 3 und 4 bzw. 3 und 5 liegt und der minimale Spalt zwischen den Spulen 7 und 8 bzw. 7 und 1 von Fig. 1 liegt. Würde dagegen der maximale Spalt z. B. zwischen 7 und 8 und 3 und 4 liegen, so würden die Ableitungen D1, D3 negativ sind und die Ableitungen D5, D7 positiv, so dass die beiden Kombinationswerte D1-D5 einerseits und D3-D7 andererseits zu großen negativen Werten führen würden, wie es in Spalte 1300 von Fig. 13 dargestellt ist. Entsprechend würde beispielsweise eine Auswertung ebenfalls dazu führen, ob der maximale Spalt und damit auch der minimale Spalt an einer Position ist, wie sie in einer der letzten vier Spalten dargestellt ist. Würde daher beispielsweise der maximale Spalt der Spule 7 gegenüberliegen, wie es bei 1302 beispielhaft dargestellt ist, so würde der minimale Spalt der Spule 3 gegenüberliegen. D1 würde negativ sein, D3 würde nahezu gleich null sein, D5 würde positiv sein und D7 würde nahezu gleich null sein. D1-D5 würde dann zu einem großen negativen Wert führen und D3-D7 zu einem Wert nahezu gleich null. Entsprechend würde aufgrund der unterschiedlichen Auswertungen der Kombinationsgrößen D1-D5 einerseits und D3-D7 andererseits, die groß positiv, groß negativ und auch null werden können, zur unterschiedlichen Lokalisierung des maximalen bzw. minimalen Spalts geschlossen werden können, wie es in den beiden ersten Zeilen in Fig. 13 dargestellt ist.

Die beiden letzten Zeilen in Fig. 13 stellen wiederum dar, welche Spulen zur Lageregelung angesteuert werden können. Unterschieden wird dahin gehend, ob die Lageregelung im gleichen Intervall noch durchgeführt wird, oder aber im nächsten Intervall, also wenn die Rollen der Antriebsspulen und der Mitlaufspulen vertauscht sind. Je nach Implementierung, wenn die Intervalle groß genug sind, kann die Lageregelung im gleichen Intervall vorgenommen werden. Für die erste Zeile 1301, bei der der maximale Spalt zwischen den Spulen 3 und 4 bzw. 3 und 5 ist, also irgendwo der Spule 4 entgegenliegt, könnte zur Lageregelung ohne Weiteres z. B. ein positives Potenzial an die Spule 4 angelegt werden und ein negatives Potenzial bzw. ein Massepotenzial an die Spule 8, und zwar mit einer Polarität, die dazu führt, dass der Rotor zu der Spule 4 hin angezogen wird, um den Motorspalt deutlich zu verringern. Würde dagegen eine Lageregelung nicht im selben Intervall, sondern im nächsten Intervall erfolgen, so würde bei einer Drehrichtung, wie sie bei 111 in Fig. 1 eingezeichnet ist, die Spule 3 oder die Spule 5 zur Lageregelung eingesetzt werden, und zwar zur Beaufschlagung mit einem positiven Potenzial beispielsweise, da dann die Spulen 3 und 5 im Intervall k-1 nicht mehr die Antriebsspulen sind, sondern die Lageregelungsspulen.

Analog beispielsweise würde man, wie es in Spalte 1302 dargestellt ist, im gleichen Intervall, in dem der maximale Spalt der Spule 7 in Fig. 1 gegenüberliegt, eine Lageregelung vornehmen, und zwar unter Verwendung der Lageregelungsspulen 6, 8 zur Beaufschlagung mit z. B. einem positiven Potenzial und der anderen Spulen 2, 4 zum Beaufschlagen mit einem negativen Potenzial oder mit Masse. Wenn jedoch die Lageregelung im nächsten Intervall vorgenommen wird, so kann ohne Weiteres bereits die Spule 7 selbst verwendet werden, um an diese ein positives Signal anzulegen und an die gegenüberliegende Spule 3 ein Massepotenzial oder ein negatives Potenzial.

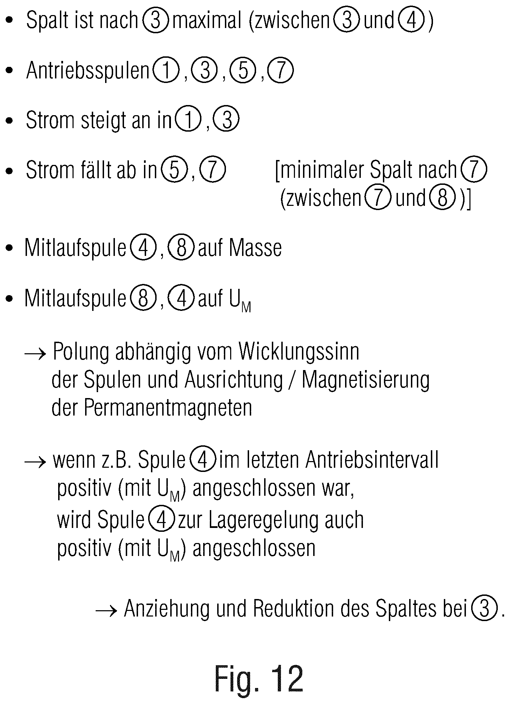

Dies ist beispielhaft in Fig. 12 zusammengestellt. Ist der Spalt z. B. nach der Spule 3 maximal, also zwischen 3 und 4 oder zwischen 3 und 5, wie es in der ersten Spalte in Fig. 13 dargestellt ist, so sind die Antriebsspulen die Spulen 1, 3, 5, 7. Dies bedeutet, dass aufgrund des Spalts an der genannten Position der Strom in den Spulen 1, 3 ansteigt und in den Spulen 5, 7 abfällt. Um nunmehr eine Lageregelung zu erreichen, würden, wenn die Lageregelung im gleichen Intervall vorgenommen wird, die Mitlaufspule 4 auf Masse und die Mitlaufspule 8 auf U_{M} gelegt werden oder aber umgekehrt. Alternativ, könnte auch die Mitlaufspule 4 auf Masse und die Mitlaufspule 8 auf U_{M} sein, oder es könnte die Mitlaufspule 8 auf Masse und die Mitlaufspule 4 auf U_{M} verwendet werden. Die für einen Motor zutreffende Alternative hängt von dem Wicklungssinn der Spulen und der Ausrichtung bzw. Magnetisierung der Permanentmagneten ab.

Generell besteht eine Ausführungsform darin, dass die Lageregelung so gemacht wird, dass bei maximalem Spalt die Polung so gewählt wird, wie sie im letzten Antriebsintervall war. Wenn beispielsweise die Spule 4 im letzten Antriebsintervall positiv (mit U_{M}) angeschlossen war, wird die Spule 4 zur Lageregelung auch positiv (mit U_{M}) angeschlossen. Damit findet eine Anziehung statt und eine Reduktion des Spalts gegenüber der Spule 3. War die Spule 4 jedoch im letzten Antriebsintervall negativ (mit -U_{M} oder Masse) angeschlossen, wird die Spule 4 zur Lageregelung auch negativ (mit -U_{M}) oder Masse) angeschlossen. Damit würde dann ebenfalls eine Anziehung und Reduktion des Spalts bei 3 erreicht werden. Entsprechend umgekehrt wird dann jeweils die gegenüberliegende Spule verschaltet, also bezüglich die Spule 8.

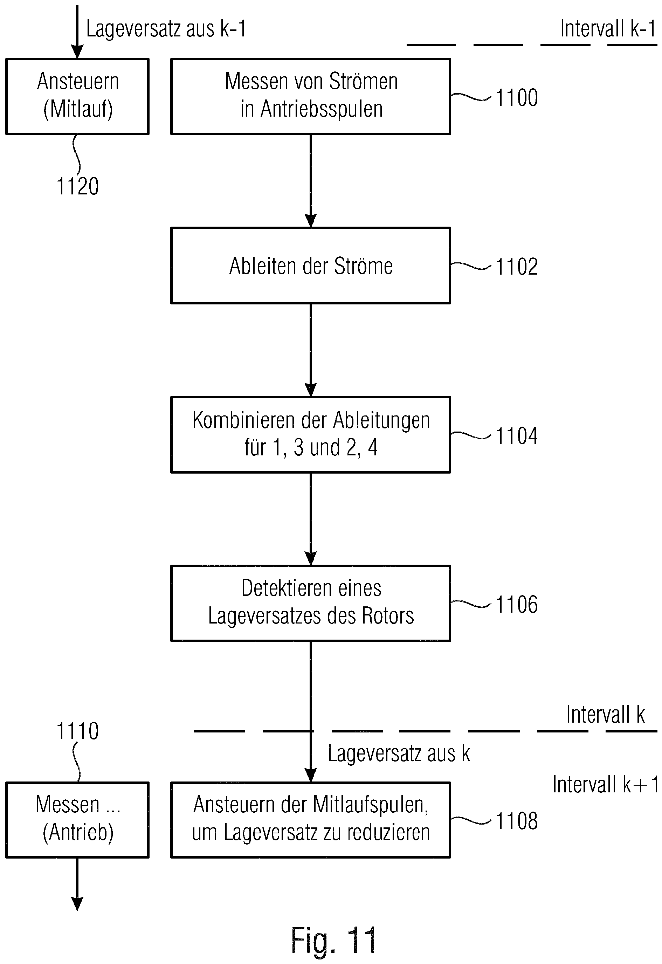

Fig. 11 zeigt ein Flussdiagramm zur Durchführung verschiedener Maßnahmen, die von der Steuerung 500 beispielsweise, die in Fig. 5 dargestellt ist, ausgeführt werden.

Betrachtet wird zunächst das Intervall k. Im Intervall k wird vorzugsweise eine Messung von Strömen in den Antriebsspulen vorgenommen, wie es bei 1100 gezeigt ist. Hierzu werden beispielsweise entsprechende Stromverläufe erstellt, wie sie in Fig. 7 oder Fig. 10 dargestellt sind. Generell wird es jedoch bevorzugt, einen Stromverlauf über der Zeit zu erfassen, obgleich lediglich ein erster Stromwert zu einem ersten Zeitpunkt und ein zweiter Stromwert z. B. zu einer Mitte des Intervalls ebenfalls bereits ausreichen würden, Hierauf werden in einem Schritt 1102 die Ströme abgeleitet, um beispielsweise die Werte D1 bis D7 zu bilden, die in Fig. 13 dargestellt worden sind.

Dann werden in einem Schritt 1104 die Ableitungen kombiniert und zwar vorzugsweise für die Spulen 1, 3 einerseits und 2, 4 andererseits, also für gegenüberliegende Spulen entsprechend der Nomenklatur, wie sie in Fig. 3 dargestellt ist. Gegenüberliegende Spulen sind insgesamt betrachtet bezüglich der Nomenklatur, wie sie in Fig. 13 dargestellt ist, die Spulen 1 und 5 und 3 und 7.

In einem Schritt 1106 wird dann eine Detektion eines Lageversatzes des Rotors vorgenommen, um herauszufinden, in welcher Richtung der Rotor versetzt ist. Dies findet beispielsweise durch Auswertung der beiden Zeilen 1310 und 1311 von Fig. 13 statt, um auf die beiden ersten Zeilen schließen zu können bzw. um eine entsprechende Ansteuerung der Mitlaufspulen durchzuführen, um den Lageversatz zu reduzieren, wie es anhand der letzten beiden Zeilen in Fig. 13 dargestellt ist. Hat also z. B. die Zeile 1310 einen großen positiven Wert und die Zeile 1311 einen negativen großen Wert, so würde dies gemäß der fünften Zeile von Fig. 13 dazu führen, dass zur Lageregelung die Spulen 2, 6 angesteuert werden, wenn die Lageregelung noch im gleichen Intervall vorgenommen wird, oder dass die Spulen 1, 2 angesteuert werden, wenn die Lageregelung im nächsten Intervall stattfindet.

Das Ansteuern der Mitlaufspulen ist bei 1108 in Fig. 11 dargestellt. Wenn die Intervalle groß genug sind bzw. die Messung über nur einen Bruchteil des Intervalls ausreichend ist, um einigermaßen sicher den Rotorversatz zu bestimmen, kann das Ansteuern der Mitlaufspulen, um den Lageversatz zu reduzieren, wie es bei 1108 in Fig. 11 dargestellt ist, im selben Intervall erfolgen. Wenn jedoch das gesamte Intervall verwendet wird, um die Schritte 1100 bis 1106 durchzuführen, so wird die Ansteuerung der Mitlaufspulen im nächsten Intervall k+1 stattfinden.

Im nächsten Intervall findet ferner eine erneute Messung statt, wie es bei 1110 in Fig. 11 dargestellt ist. Entsprechend wird nach dem Intervall k-1 im Intervall k die Ansteuerung der Mitlaufspulen aufgrund des Lageversatzes aus dem Intervall k-1 vorgenommen, wie es bei 1120 in Fig. 11 dargestellt ist. Wenn also eine Lageregelung jeweils im nächsten Intervall erfolgt, wird eine Ansteuerung der Mitlaufspulen des nächsten Intervalls aufgrund des Lageversatzes aus dem vorherigen Intervall stattfinden.

Obgleich die vorliegende Erfindung anhand der diversen Figuren und insbesondere anhand von Fig. 1 mit vier Permanentmagneten und acht Spulen dargestellt worden ist, sei darauf hingewiesen, dass beliebige andere Kombinationen von Magneten und Spulen ebenfalls eingesetzt werden können, solange die Anzahl der Permanentmagnete kleiner als die Anzahl der Spulen ist. Damit existieren immer eine erste Gruppe von Spulen, die mit einem ersten Sternpunkt miteinander elektrisch leitend verbunden sind, die zur Antriebssteuerung verwendet werden, während eine zweite Gruppe von Spulen, die mit einem zweiten Sternpunkt miteinander elektrisch leitend verbunden sind, Mitlaufspulen sind. Die Anzahl der Spulen in der Antriebsgruppe und der Mitlaufgruppe kann gleich 2 sein, kann jedoch auch gleich 3 oder, wie es bevorzugt wird, gleich 4 sein, obgleich noch grö-βere Spulenanzahlen ebenfalls möglich sind.

Bei Ausführungsbeispielen basiert die Vorgehensweise insbesondere zur Lageregelung darauf, dass der Strom durch eine Spule, bei konstant angelegter Spannung ansteigt, wenn der Spalt des Motors, der der Spule gegenüberliegt, größer wird. Bei der Drehzahlregelung wird zum Beispiel darauf aufgebaut, dass der Strom für die Antriebsspulen bereits in dem vorhergehenden Zeitintervall, in dem die Antriebsspulen noch Mitlaufspulen sind, eingeschaltet werden und ausgeschaltet werden kann. Damit kann für eine Antriebsspule vom Anfang des Zeitintervalls bis zum Ende des Zeitintervalls der Strom beibehalten werden, der benötigt wird, da dann in dem vorherigen oder nachfolgenden Zeitintervall, wo die Spule nur noch die Mittellaufspule ist, ohne Einfluss auf das Motorverhalten der Strom eingeschaltet bzw. ausgeschaltet werden kann. Daher ist es auch unerheblich, ob in dem Mitlaufintervall, also in dem Intervall, in dem eine Spule die Mitlaufspule ist, der Strom durch die Spule komplett ausgeschaltet wird, also auf null geschaltet wird, oder auf einer bestimmten Höhe gelassen wird.

Insbesondere zum Ausschalten des Stroms wird bei einem Ausführungsbeispiel der vorliegenden Erfindung, bei dem Schalter eingesetzt werden, wie sie in Fig. 4 bzw. Fig. 6 dargestellt sind, eine Abtrennung der entsprechenden Spule von dem Potenzial, z. B. durch den Schalter S41 für die Spule 304 vorgenommen, während gleichzeitig der Schalter S42 geschlossen wird. Alternativ könnte der Schalter S42 jedoch auch offengelassen werden. Dennoch findet ein Stromausgleich und eine entsprechende Entladung der Sputen statt, und zwar insbesondere über die Freilaufdioden, die sicherstellen, dass Potenziale nicht so stark schwanken, sondern durch die Funktionalität der Freilaufdioden in erträglichen Grenzen gehalten werden. Insbesondere vorteilhaft ist auch, dass durch das Ausschalten im Intervall, in dem die Spule nicht zum Antrieb beiträgt, kein Strom über einen Widerstand geleitet werden muss und daher in Wärme umgesetzt wird. Stattdessen findet ein Stromfluss zwischen den Spulen einerseits und dem Netzteil andererseits und insbesondere einem Glättungskondensator im Netzteil statt. Damit wird sichergestellt, dass eine in den Spulen gespeicherte Energie, die dann nicht mehr benötigt wird, wenn die Spule im Mitlaufmodus ist, an das Netzteil abgegeben wird und von dort im nächsten Zyklus zugeführt wird. Damit findet kein Energieverlust, sondern lediglich ein Energiependeln vom Motor in das Netzteil und umgekehrt statt, was dazu führt, dass besonders Kühlanforderungen reduziert sind und Leistungsanforderungen so niedrig als möglich sind.

Bezüglich der Lageregelung sei ferner darauf hingewiesen, dass diese qualitativ oder vorzugsweise sogar quantitativ stattfindet. insbesondere wird eine Proportionalregelung bevorzugt. Hierzu können die Spulen, wie sie beispielsweise anhand von Fig. 13 in den letzten beiden Zeilen bestimmt worden sind, mit einem bestimmten Strom versehen werden. Es wird jedoch bevorzugt, die Spulen mit derselben Referenzspannung U_{M} zur Lageregelung zu beaufschlagen, und entsprechend lediglich die entsprechenden Schalter, wie sie in Fig. 6 beispielsweise dargestellt sind, zu steuern. Hierzu wird es bevorzugt, entsprechende Zeitverläufe an die Schalter anzulegen, um letztendlich abhängig von einem bestimmten gemessenen Versatz der von den quantitativen Werten, die in den Zeilen 1310, 1311 bestimmt worden sind, abhängen, angesteuert werden.

Hierbei werden je nach entsprechender Drehzahl Intervalle im Mikrosekundenbereich ausreichen. Wenn beispielsweise eine geforderte Drehzahl 2000 Umdrehungen pro Sekunde ist, was etwa 120000 Umdrehungen pro Minute entspricht, so ist ein Drehzyklus 62,5 µs lang. In einem solchen Zyklus, der in beispielsweise vier Intervalle aufgeteilt wird, wobei jedes Intervall etwa 15 µs lang ist, ist es für kleine bis mittlere Abweichungen ausreichend, für 1 bis 3 µs im Mitlaufintervall das Referenzpotenzial U_{M} von Fig. 6 mit entsprechender Schaltereinstellung anzulegen, um eine Lageregelung zu erreichen.

Ferner sei darauf hingewiesen, dass insbesondere die Lageregelung für magnetgelagerte Motoren einsetzbar ist, die keine Berührungslager, wie beispielsweise Kugel- oder Wälzlager haben. Solche magnetgelagerten Motoren werden ferner vorzugsweise als Scheibenmotoren ausgebildet, die entlang der axialen Richtung der Drehachse stabil sind, jedoch entlang der radialen Richtung, also bezüglich des Versatzes des Rotors bezüglich des Stators in radialer Richtung zu regeln sind. Die Drehzahlsteuerung kann jedoch genauso gut auch mit Berührungslager-ausgebildeten Motoren implementiert werden, es muss also nicht unbedingt ein Magnetlager vorhanden sein, um die Drehzahlsteuerung in Verbindung mit zwei Spulengruppen mit unterschiedlichen Sternpunkten und unterschiedlichen Ansteuergruppen durchzuführen.

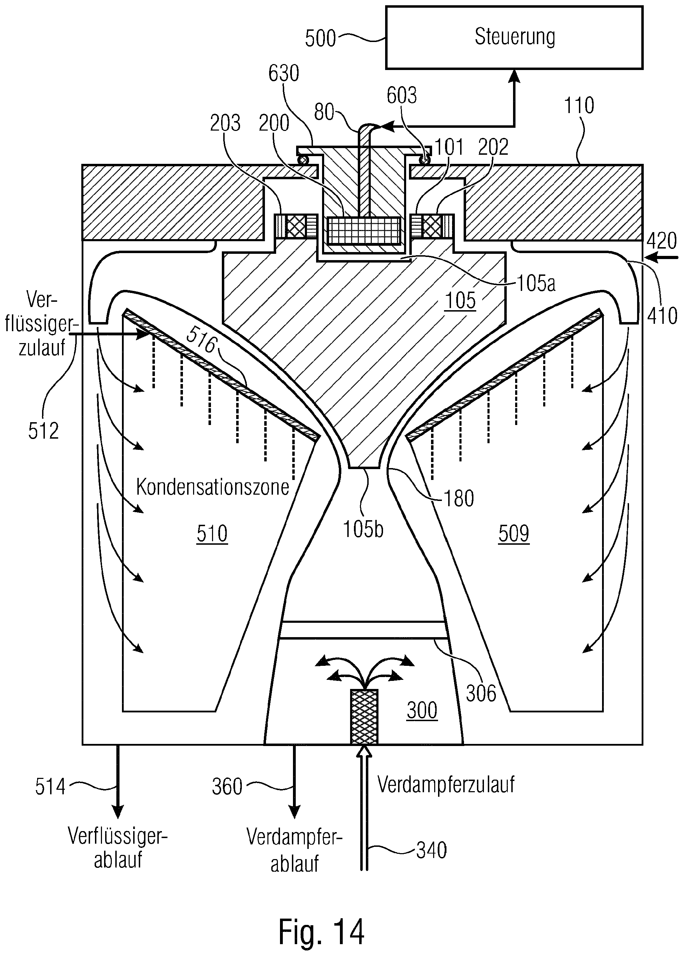

Fig. 14 zeigt eine bevorzugte Anwendung des Scheibenläufermotors an dem Beispiel einer Wärmepumpe. Die Wärmepumpe umfasst einen Verdampfer 300, einen Kompressor 420 und einen Verflüssiger 509, wobei der Kompressor 420 den elektrischen Scheibenläufermotor aufweist, der Bezug nehmend auf die Figuren 1a bis 5 beschrieben worden ist.

Zusätzlich zu den Elementen des Scheibenläufermotors, der beispielsweise Bezug nehmend auf eine der vorstehenden Figuren dargestellt worden ist, umfasst der Kompressor ferner einen Leitraum 410, der radial angeordnet ist, um den von dem zu bewegenden Element 105 geförderten Arbeitsdampf, der von dem Verdampfer 300 angesaugt worden ist, weiterzufördern und letztendlich den Druck auf den geforderten Druck in der Kondensationszone 510 im Kondensierer 509 zu erhöhen.

Zu kühlende Flüssigkeit läuft über einen Verdampferzulauf 340 in den Verdampfer. Gekühlte Arbeitsflüssigkeit läuft über einen Verdampferablauf 360 wieder aus dem Verdampfer ab. Um sicherzustellen, dass das Radialrad 105 nur Dampf und nicht Wassertropfen zusätzlich zum Dampf ansaugt, ist zusätzlich ein Tropfenabscheider 306 vorgesehen. Aufgrund des niedrigen Drucks in dem Verdampfer 300 wird ein Teil der über den Verdampferzulauf 340 in den Verdampfer 300 gebrachten Arbeitsflüssigkeit verdampft und durch den Tropfenabscheider 306 hindurch über die zweite Seite 105b des Radialrads 105 angesaugt und nach oben gefördert und dann in den Leitraum 510 abgegeben. Aus dem Leitraum 510 wird komprimierter Arbeitsdampf in die Kondensationszone 510 gebracht. Der Kondensationszone 510 wird ferner über einen Verflüssigerzulauf 512 zu erwärmende Arbeitsflüssigkeit zugeführt, die durch die Kondensation mit dem erwärmten Dampf erwärmt wird und über einen Verflüssigerablauf 514 abgeführt wird. Vorzugsweise ist der Verflüssiger als Verflüssiger in Form einer "Dusche" ausgebildet, so dass über eine Verteilereinrichtung 516 eine Flüssigkeitsverteilung in der Kondensationszone 510 erreicht wird. Damit wird möglichst effizient der komprimierte Arbeitsdampf kondensiert und die in ihm enthaltene Wärme wird in die Flüssigkeit im Verflüssiger übertragen.

Bei dem in Fig. 14 gezeigten Ausführungsbeispiel ist ferner ein Motorgehäuse 110 eingezeichnet, das gleichzeitig auch das obere Gehäuseteil des Kondensierers bzw. Verflüssigers 509 bildet. Darüber hinaus ist eine Anschlussleitung 80 für die Spulen des Stators 200 mit einer Steuerung 600 verbunden, um die entsprechenden Drehzahlsteuerungen und gleichzeitig auch die aktive Lagerung über ein vorzugsweise verwendetes Magnetlager durchzuführen, wie es anhand von Fig. 7 beschrieben worden ist. Die Steuerung stellt damit zusätzlich auch die Funktionen der Radialerfassung 270 und der Radial-Steuerung/Regelung 280 bereit.

Darüber hinaus ist in Fig. 14 eine Implementierung gezeigt, bei der der Scheibenläufermotor einen fest vergossenen Block 630 aus Vergussmaterial aufweist, der über einen Dichtungsring 603 bezüglich des Motorgehäuses 110 abgedichtet ist, so dass eine druckdichte Trennung zwischen dem Äußeren und dem Inneren stattfindet. Sowohl der Spulenhalter als auch die Spulen sind von einem Verkapselungsmaterial umgeben, das in Fig. 14 als einstückig mit dem festen Block 630 ausgebildet dargestellt ist. Dies muss jedoch nicht unbedingt der Fall sein. Es wird jedoch bevorzugt, durch das Verkapselungsmaterial, das sich in dem Motorspalt erstreckt, eine Trennung herbeizuführen, dahin gehend, dass die Spulen nicht in dem Gebiet mit niedrigem Druck, das innerhalb des Motorgehäuses vorhanden ist, angeordnet sind.

Ferner ist bei dem in Fig. 14 gezeigten Ausführungsbeispiel der Stator in einer Ausnehmung angeordnet, die durch eine obere Seite 105a definiert ist. Bei anderen Ausführungsformen kann jedoch der Rotor ohne Ausnehmung ausgebildet sein, so dass der Bereich aus Magnet 101, Rückschlusselement 202 und Bandage 203, wie er in Fig. 14 gezeigt ist, auf ein oben flach geformtes Radialrad aufgesetzt ist.

Aus Fig. 14 wird ferner ersichtlich, dass das zu bewegende Element, das mit dem Rotor 10 verbunden ist, das Radialrad bzw. Schaufelrad 105 ist, das dazu da ist, um im Zusammenwirken mit dem Leitweg 410 den vom Verdampfer geförderten Arbeitsdampf zu verdichten und damit zu erhitzen, damit Wärme vom Verdampfer in den Verflüssiger gepumpt wird.

Vorzugsweise wird der Rotor bezüglich des Stators durch ein Magnetlager gelagert und der Rotor wird bezüglich des Stators aufgrund der Permanentmagnete aufseiten des Rotors und der elektrischen Spulen auf der Seite des Stators axial gehalten und nicht speziell geregelt. Eine radiale Erfassungseinrichtung sowie eine Radial-Steuerung-Regelungseinrichtung (500) sind vorgesehen. Die radiale Erfassungseinrichtung erfasst die Position des Rotors bezüglich des Stators bzw. umgekehrt. Das Ergebnis der radialen Erfassung wird über eine Sensorleitung einer Radial-Steuerung/Regelungseinrichtung mitgeteilt. Diese erzeugt entsprechend die Aktorsignale über Aktorsignalleitungen an dem Rotor bzw. dem Stator je nach Implementierung. Es wird eine Ansteuerung der Spulen vorgenommen, um den Rotor bezüglich des Stators aufgrund des Aktorsignals zu positionieren, derart, dass der Motorspalt um den kompletten Rotor herum eine ähnliche Größe hat und der Rotor den Stator nicht berührt.

Bei einem Ausführungsbeispiel ist der Rotor innen und ist der Stator außen angeordnet. Dabei handelt es sich somit um einen Innenläufer im Gegensatz zu beispielsweise Fig. 1.. Prinzipiell ist jedoch die Magnetlagerung am Beispiel eines Reluktanzlagers in beiden Fällen dahin gehend ähnlich, dass eine axiale Regelung nicht stattfindet, während eine radiale Regelung durch die radiale Erfassungseinrichtung und die Radial-Steuerung/Regelungseinrichtung stattfindet.

Obgleich bestimmte Elemente als Vorrichtungselemente beschrieben sind, sei darauf hingewiesen, dass diese Beschreibung gleichermaßen als Beschreibung von Schritten eines Verfahrens und umgekehrt anzusehen ist.

Ferner sei darauf hingewiesen, dass eine Steuerung, die beispielsweise durch das Element 500 bewirkt wird, als Software oder Hardware implementiert werden kann. Die Implementierung der Steuerung kann auf einem nicht-flüchtigen Speichermedium, einem digitalen oder anderen Speichermedium, insbesondere einer Diskette oder CD mit elektronisch auslesbaren Steuersignalen erfolgen, die so mit einem programmierbaren Computersystem zusammenwirken können, dass das entsprechende Verfahren zum Betreiben einer Wärmepumpe ausgeführt wird. Allgemein umfasst die Erfindung somit auch ein Computer-Programm-Produkt mit einem auf einem maschinenlesbaren Träger gespeicherten Programmcode zur Durchführung des Verfahrens, wenn das Computer-Programm-Produkt auf einem Rechner abläuft. In anderen Worten ausgedrückt, kann die Erfindung somit auch als ein Computer-Programm mit einem Programmcode zur Durchführung des Verfahrens realisiert werden, wenn das Computer-Programm auf einem Computer abläuft.

### BEZUGSZEICHENLISTE

- 80: Anschlussleitung
- 100: Rotor
- 101, 102, 103, 104: Permanentmagneten
- 105: zu drehender Bereich (z.B. Radialrad)
- 105a: obere Seite des Radialrads
- 105a: untere Seite des Radialrads
- 110: Motorgehäuse
- 200: Stator
- 202: magnetisches Rückschlusselement
- 203: Bandage
- 300: Verdampfer
- 301, 302, 303, 304: Antriebsspulen
- 306: Tropfenabscheider
- 321, 322, 323, 324: zweite Gruppe von Spulen
- 311: erster Sternpunkt SP1
- 331: zweiter Sternpunkt SP2
- 340: Verdampferzulauf
- 360: Verdampferablauf
- 400: Bezugspotenzial Uₙ
- 401: erster Schalter
- 402: zweiter Schalter
- 410: Leitraum
- 420: Kompressor
- 500: Steuerung
- 501: erste Sternpunktgruppe
- 502: zweite Sternpunktgruppe
- 509: Kondensierer
- 510: Kondensationszone
- 512: Verflüssigerzulauf
- 514: Verflüssigerablauf
- 516: Verflüssigerverteiler
- 600: Bezugsknoten
- 601: Masseknoten
- 602: Bezugspotenzialanschlussknoten
- 603: Dichtungsring
- 604, 605, 606, 607: Zwischenknoten
- 611, 612, 613, 614: Freilaufdioden
- 621, 622, 623, 624: Stromsensoren
- 630: Statorblock
- 700: Intervall
- 705: Einschaltzeitpunkt
- 706: Einschaltzeitpunkt
- 707: Einschaltzeitpunkt
- 901: erste Lageregelungsrichtung
- 902: zweite Lageregelungsrichtung
- 1100: Messen von Strömen
- 1102: Ableiten der Ströme
- 1104: Kombinieren der Ableitungen
- 1106: Detektieren
- 1108: Ansteuern der Mitlaufspulen
- 1110: Messen im Intervall k+1
- 1120: Ansteuern im Intervall k
- 1300, 1301, 1302: Spalten von Fig. 13
- 1310, 1311: Zeilen von Fig. 13

## Patentansprüche

1. Elektromotor, mit folgenden Merkmalen:
einem Rotor (100) mit einer ersten Anzahl von Permanentmagneten (101, 102, 103, 104), wobei jeder Permanentmagnet einen ersten Sektor umfasst;
einem Stator (200) mit einer zweiten Anzahl von Polfüßen, wobei um jeden Polfuß der zweiten Anzahl von Polfüßen eine Spule gewickelt ist, und wobei ein Polfuß einen zweiten Sektor umfasst, der kleiner als der erste Sektor ist,
wobei eine erste Gruppe von Spulen (301, 302, 303, 304) über einen ersten Sternpunkt (311) miteinander elektrisch leitend verbunden ist,
wobei eine zweite Gruppe von Spulen (321, 322, 323, 324) über einen zweiten Sternpunkt (331) miteinander elektrisch leitend verbunden ist,
wobei der zweite Sternpunkt (331) von dem ersten Sternpunkt (311) elektrisch isoliert ist,
wobei eine Spule der ersten Gruppe von Spulen (301, 302, 303, 304) zwischen zwei Spulen der zweiten Gruppe von Spulen (321, 322, 323, 324) angeordnet ist; und
einer Steuerung (500) zum Beaufschlagen der ersten Gruppe von Spulen (301, 302, 303, 304) mit Antriebssignalen, um den Rotor (102) gegenüber dem Stator (200) mit einem Drehmoment zu versehen, und zum Beaufschlagen wenigstens einer Spule (321, 322, 323, 324) der zweiten Gruppe von Spulen (321, 322, 323, 324) mit einem Steuersignal, das sich von den Antriebssignalen unterscheidet,
wobei jede Spule der ersten und der zweiten Gruppe von Spulen zwei Anschlüsse hat, wobei je ein Anschluss jeder Spule mit dem ersten bzw. zweiten Sternpunkt (311, 321) verbunden ist,
wobei der jeweils andere Anschluss jeder Spule mit je einem steuerbaren Schalter (401, 403) verbunden ist, wobei der steuerbare Schalter (401, 403) ausgebildet ist, um den anderen Anschluss jeder Spule abhängig von einem Steuersignal der Steuerung (500) mit einem positiven Referenzpotenzial, einem negativen Referenzpotenzial oder einem Massepotenzial zu verbinden oder in einen Leerlauf zu schalten, und
wobei die Steuerung (500) ausgebildet ist, um in einem ersten Intervall die Spulen der ersten Gruppe mit jeweils entweder dem positiven Referenzpotenzial oder dem negativen Referenzpotenzial oder dem Massepotenzial zu verbinden, und um in dem ersten Intervall wenigstens eine der Spulen der zweiten Gruppe in den Leerlauf zu schalten oder zu einem späteren zweiten Intervall die Spulen der zweiten Gruppe mit jeweils wenigstens entweder dem positiven Referenzpotenzial oder dem negativen Referenzpotenzial oder dem Massepotenzial zu verbinden, um in dem zweiten Intervall ein Drehmoment auf den Rotor (102) auszuüben.

2. Elektromotor nach Anspruch 1, bei dem die Steuerung (500) ausgebildet ist, um in einem ersten Intervall die erste Gruppe von Spulen (301, 302, 303, 304) mit den Antriebssignalen zu beaufschlagen und um zu einem späteren zweiten Intervall die zweiten Gruppe von Spulen mit Antriebssignalen zu beaufschlagen, um in dem zweiten Intervall den Rotor (102) gegenüber dem Stator (200) mit einem Drehmoment zu versehen, oder
bei dem die Polfüße, um die die Spulen gewickelt sind, in einer Kreisanordnung angeordnet sind, wobei jeder Polfuß einen Kreissektor umfasst, und bei dem zwischen zwei Spulen einer Gruppe eine Spule der anderen Gruppe jeweils angeordnet ist, oder
bei dem jede Spule entweder der ersten Gruppe oder der zweiten Gruppe angehört und keine Spule zu beiden Gruppen gehört, oder
bei dem die Steuerung (500) ausgebildet ist, um zueinander benachbarte Spulen in einer Gruppe mit jeweils unterschiedlichen Potenzialen zu beaufschlagen, wenn die Gruppe in einem Intervall angesteuert wird, in dem der Rotor (102) durch die Spulen der zweiten Gruppe mit dem Drehmoment versehen wird, oder
bei dem die erste Gruppe vier Spulen aufweist, und bei dem die zweite Gruppe vier Spulen aufweist, wobei der Rotor (102) vier unterschiedlich magnetisierte Permanentmagnetabschnitte aufweist, und wobei die Steuerung (500) ausgebildet ist, um in einem Intervall zwei benachbarte Spulen der ersten Gruppe als die Antriebssignale mit unterschiedlichen Spannungen zu beaufschlagen oder zwei gegenüberliegende Spulen der ersten Gruppe als die Antriebssignale mit der gleichen Spannung zu beaufschlagen.

3. Elektromotor nach einem der vorhergehenden Ansprüche,
bei dem die Steuerung (500) ausgebildet ist, um in einem ersten Intervall die erste Gruppe von Spulen (301, 302, 303, 304) mit den Antriebssignalen anzusteuern und um in einem zweiten Intervall die zweite Gruppe von Spulen (321, 322, 323, 324) mit den Antriebssignalen anzusteuern, und
bei dem die Steuerung (500) ausgebildet ist, um an einem Beginn des ersten Intervalls nach dem Ende des vorausgehenden Intervalls die zweite Gruppe von Spulen (321, 322, 323, 324) auf ein Massepotenzial oder einen Leerlauf zu schalten, und vor einem Ende des ersten Intervalls an einem Einschaltzeitpunkt eine Spannungsversorgung der Spulen der zweiten Gruppe von Spulen einzuschalten, und zwar unter Verwendung eines Spannungswerts für die Spannungsversorgung, der für das zweite Intervall vorgesehen ist, in dem die zweite Gruppe von Spulen (321, 322, 323, 324) mit den Antriebssignalen angesteuert werden.

4. Elektromotor nach Anspruch 3,
bei die die Steuerung (500) ausgebildet ist, um den Einschaltzeitpunkt abhängig von einer vorgebbaren Drehzahl bezüglich des Beginns des zweiten Intervalls einzustellen.

5. Elektromotor nach Anspruch 2 oder 3,
bei dem die Steuerung (500) ferner ausgebildet ist, um zur Erhöhung einer Drehzahl den Einschaltzeitpunkt bezüglich des Endes des ersten Intervalls früher zu legen oder zur Erniedrigung der Drehzahl den Einschaltzeitpunkt bezüglich des Endes des ersten Intervalls später zu legen.

6. Elektromotor nach einem der vorhergehenden Ansprüche,
bei dem die Steuerung (500) eine erste Steuereinheit (500a), die nur für die erste Gruppe von Spulen (501) vorgesehen ist, und eine zweite Steuereinheit (500b) aufweist, die nur zum Steuern der zweiten Gruppe von Spulen (502) vorgesehen ist, wobei jede Steuereinheit ein eigenes Referenzpotenzial oder ein eigenes Massepotenzial aufweist.

7. Elektromotor nach Anspruch 6,
bei dem die erste Steuereinheit (500a) bzw. die zweite Steuereinheit (500b) steuerbare Schalter (S11, S12; S21, S22; S31, S32; S41, S42) pro Spule aufweist, wobei ein steuerbarer Schalter (S21, S31, S41) pro Spule zwischen dem Referenzpotenzial (600, 602) der Steuereinheit und einem Anschluss (604, 605, 606, 607) der entsprechenden Spule geschaltet ist, der nicht mit dem Sternpunkt (311, 331) verbunden ist, und
wobei ein zweiter steuerbarer Schalter (S12, S22, S32, S42) zwischen dem Anschluss (604, 605, 606, 607) der entsprechenden Spule und dem Massepotenzial (601) der entsprechenden Steuereinheit geschaltet ist, wobei der zweite Schalter ferner durch eine Freilaufdiode (611, 612, 613, 614) überbrückt ist, wobei die Steuerung (500) ausgebildet ist, um die steuerbaren Schalter zu öffnen oder zu schließen, oder um das Referenzpotenzial zu erhöhen oder zu erniedrigen.

8. Elektromotor nach einem der vorhergehenden Ansprüche,
bei dem einer Spule der ersten Gruppe von Spulen ein Sensor (621, 622, 623, 624) zugeordnet ist, um den Strom durch die Spule aufgrund eines Antriebssignals für die Spule zu erfassen,
wobei die Steuerung (500) ausgebildet ist,
um abhängig von Sensorsignalen der Sensoren der ersten Gruppe von Spulen (301, 302, 303, 304) eine Position oder Positionsabweichung von einer zentralen Position des Rotors (102) zu ermitteln, und
um abhängig von der Position oder der Positionsabweichung ein Lageregelungssignal an eine Spule der zweiten Gruppe von Spulen (321, 322, 323, 324) in dem ersten Intervall oder an eine Spule der ersten Gruppe in einem zweiten Intervall, das auf das erste Intervall folgt, anzulegen, um die Positionsabweichung von der zentralen Position zu reduzieren oder zu eliminieren.

9. Elektromotor nach einem der vorhergehenden Ansprüche,
bei dem die Steuerung (500) ausgebildet ist, um einen induzierten Strom in wenigstens einer Spule der ersten Gruppe von Spulen (301, 302, 303, 304) aufgrund eines radialen Versatzes des Rotors (102) bezüglich des Stators (200) zu erfassen und um wenigstens eine Spule der ersten oder zweiten Gruppe von Spulen mit einem Lageänderungssignal zu beaufschlagen, das derart ausgebildet ist, dass der Versatz reduziert oder eliminiert wird.

10. Elektromotor nach einem der vorhergehenden Ansprüche,
bei dem die Steuerung (500) ausgebildet ist,
um einen Strom oder eine Änderung des Stroms in einer Spule der ersten Gruppe von Spulen (301, 302, 303, 304) zu erfassen (1100),
um aus dem Strom oder der Änderung des Stroms und einer Lage der jeweiligen Spule einen Hinweis auf eine Richtung des Versatzes zu ermitteln (1102, 1104, 1106), und
um eine oder zwei Spulen der ersten Gruppe von Spulen (301, 302, 303, 304) oder der zweiten Gruppe von Spulen (321, 322, 323, 324) abhängig von dem Hinweis auf den Versatz mit einem Signal zu beaufschlagen, um den Versatz zu reduzieren, während die Steuerung (500) die erste Gruppe von Spulen steuert, oder
um ermittelte Spulen der ersten Gruppe zu beaufschlagen, während die Steuerung (500) in einem späteren Intervall die zweite Gruppe mit Antriebssignalen ansteuert.

11. Elektromotor nach einem der vorhergehenden Ansprüche,
bei dem die Steuerung (500) ausgebildet ist,
um Zeitverläufe von Strömen in der ersten Gruppe von Spulen (301, 302, 303, 304) aufgrund von angelegten Spannungen als Antriebssignale zu erfassen (1100),
um Änderungen der Zeitverläufe der Ströme zu ermitteln (1102),
um ermittelte Änderungen der Zeitverläufe unterschiedlich zu kombinieren (1104), um wenigstens ein Erfassungssignal zu erhalten, und
bei dem die Steuerung (500) ausgebildet ist, um wenigstens einer Spule der zweiten Gruppe von Spulen (321, 322, 323, 324) als Steuersignal ein Lageänderungssignal anzulegen, das von dem wenigstens einen Erfassungssignal abhängt (1108, 1120).

12. Elektromotor nach Anspruch 11,
bei dem die erste Gruppe von Spulen (301, 302, 303, 304) vier Spulen aufweist, die so an dem Stator (200) angeordnet sind, dass Spulenachsen zueinander einen Winkel zwischen 80 und 100° haben,
bei dem die Steuerung (500) ausgebildet ist, um die Ableitungen von zwei Spulen zu kombinieren, die zueinander einen Winkel zwischen 160 und 200° haben, um jeweils zwei Erfassungsergebnisse zu erhalten,
bei dem die Steuerung (500) ausgebildet ist, um verschiedene Zustände der Erfassungssignale auszuwerten, um wenigstens vier unterschiedliche maximale bzw. minimale Spaltpositionen zu ermitteln, und
wobei die Steuerung (500) ausgebildet ist, um abhängig von den ausgewerteten wenigstens zwei Erfassungsergebnissen eine oder zwei Lageregelungsspulen auszuwählen, an die ein positives Potenzial angelegt wird, während an wenigstens eine andere Lageregelungsspule ein negatives Potenzial angelegt wird, wobei die Steuerung (500) ausgebildet ist, um die Lageregelungspotenziale so zu legen, dass gegenüberliegende Lageregelungsspulen in der gleichen Richtung vom Strom durchflossen werden, oder dass gegenüberliegende Lageregelungsspulen nicht vom Strom durchflossen werden.

13. Elektromotor nach einem der vorhergehenden Ansprüche,
bei dem der Motor als Scheibenmotor Motor ausgebildet ist und bei dem der Rotor (102) bzw. Stator (200) eine radiale Ausdehnung bezüglich einer Drehachse des Motors hat, die größer oder gleich dem Doppelten der axialen Ausdehnung ist, oder
der magnetgelagert ist und kein Berührungslager aufweist.

14. Verfahren zum Herstellen eines Elektromotors mit einem Rotor (100) mit einer ersten Anzahl von Permanentmagneten (101, 102, 103, 104), wobei jeder Permanentmagnet einen ersten Sektor umfasst; einem Stator (200) mit einer zweiten Anzahl von Polfüßen, wobei um jeden Polfuß der zweiten Anzahl von Polfüßen eine Spule gewickelt ist, und wobei ein Polfuß einen zweiten Sektor umfasst, der kleiner als der erste Sektor ist, mit folgenden Merkmalen:
elektrisch leitend Verbinden einer erste Gruppe von Spulen (301, 302, 303, 304) über einen ersten Sternpunkt (311),
elektrisch leitend Verbinden einer zweiten Gruppe von Spulen (321, 322, 323, 324) über einen zweiten Sternpunkt (331), wobei der zweite Sternpunkt (331) von dem ersten Sternpunkt (311) elektrisch isoliert ist, wobei eine Spule der ersten Gruppe von Spulen (301, 302, 303, 304) zwischen zwei Spulen der zweiten Gruppe von Spulen (321, 322, 323, 324) angeordnet ist; und
Verbinden einer Steuerung (500) mit den Spulen der ersten und der zweiten Gruppe, zum Beaufschlagen der ersten Gruppe (301, 302, 303, 304) von Spulen mit Antriebssignalen, um den Rotor (102) gegenüber dem Stator (200) mit einem Drehmoment zu versehen, und zum Beaufschlagen wenigstens einer Spule (321, 322, 323, 324) der zweiten Gruppe von Spulen (321, 322, 323, 324) mit einem Steuersignal, das sich von den Antriebssignalen unterscheidet,
wobei jede Spule der ersten und der zweiten Gruppe von Spulen (321, 322, 323, 324) zwei Anschlüsse hat, wobei je ein Anschluss jeder Spule mit dem ersten bzw. zweiten Sternpunkt (311, 321) verbunden ist,
wobei der jeweils der andere Anschluss jeder Spule mit je einem steuerbaren Schalter (401, 403) verbunden ist, wobei der steuerbare Schalter (401, 403) ausgebildet ist, um den anderen Anschluss jeder Spule abhängig von einem Steuersignal der Steuerung (500) mit einem positiven Referenzpotenzial, einem negativen Referenzpotenzial oder einem Massepotenzial zu verbinden oder in einen Leerlauf zu schalten, und
wobei die Steuerung (500) ausgebildet ist, um in einem ersten Intervall die Spulen der ersten Gruppe mit jeweils entweder dem positiven Referenzpotenzial oder dem negativen Referenzpotenzial oder dem Massepotenzial zu verbinden, und um in dem ersten Intervall wenigstens eine der Spulen der zweiten Gruppe in den Leerlauf zu schalten oder zu einem späteren zweiten Intervall die Spulen der zweiten Gruppe mit jeweils wenigstens entweder dem positiven Referenzpotenzial oder dem negativen Referenzpotenzial oder dem Massepotenzial zu verbinden, um in dem zweiten Intervall ein Drehmoment auf den Rotor (102) auszuüben.

15. Verfahren zum Betreiben eines Elektromotors mit einem Rotor (100) mit einer ersten Anzahl von Permanentmagneten (101, 102, 103, 104), wobei jeder Permanentmagnet einen ersten Sektor umfasst; einem Stator (200) mit einer zweiten Anzahl von Polfüßen, wobei um jeden Polfuß der zweiten Anzahl von Polfüßen eine Spule gewickelt ist, und wobei ein Polfuß einen zweiten Sektor umfasst, der kleiner als der erste Sektor ist, wobei eine erste Gruppe von Spulen (301, 302, 303, 304) über einen ersten Sternpunkt (311) miteinander elektrisch leitend verbunden ist, wobei eine zweite Gruppe von Spulen (321, 322, 323, 324) über einen zweiten Sternpunkt (331) miteinander elektrisch leitend verbunden ist, wobei der zweite Sternpunkt (331) von dem ersten Sternpunkt (311) elektrisch isoliert ist, wobei eine Spule der ersten Gruppe von Spulen (301, 302, 303, 304) zwischen zwei Spulen der zweiten Gruppe von Spulen (321, 322, 323, 324) angeordnet ist, mit folgenden Schritten:
Beaufschlagen der ersten Gruppe (301, 302, 303, 304) von Spulen mit Antriebssignalen, um den Rotor (102) gegenüber dem Stator (200) mit einem Drehmoment zu versehen; und
Beaufschlagen wenigstens einer Spule (321, 322, 323, 324) der zweiten Gruppe von Spulen (321, 322, 323, 324) mit einem Steuersignal, das sich von den Antriebssignalen unterscheidet,
wobei jede Spule der ersten und der zweiten Gruppe von Spulen (321, 322, 323, 324) zwei Anschlüsse hat, wobei je ein Anschluss jeder Spule mit dem ersten bzw. zweiten Sternpunkt (311, 321) verbunden ist,
wobei der jeweils der andere Anschluss jeder Spule mit je einem steuerbaren Schalter (401, 403) verbunden ist, wobei der steuerbare Schalter (401, 403) ausgebildet ist, um den anderen Anschluss jeder Spule abhängig von einem Steuersignal der Steuerung (500) mit einem positiven Referenzpotenzial, einem negativen Referenzpotenzial oder einem Massepotenzial zu verbinden oder in einen Leerlauf zu schalten, und
wobei die Steuerung (500) ausgebildet ist, um in einem ersten Intervall die Spulen der ersten Gruppe mit jeweils entweder dem positiven Referenzpotenzial oder dem negativen Referenzpotenzial oder dem Massepotenzial zu verbinden, und um in dem ersten Intervall wenigstens eine der Spulen der zweiten Gruppe in den Leerlauf zu schalten oder zu einem späteren zweiten Intervall die Spulen der zweiten Gruppe mit jeweils wenigstens entweder dem positiven Referenzpotenzial oder dem negativen Referenzpotenzial oder dem Massepotenzial zu verbinden, um in dem zweiten Intervall ein Drehmoment auf den Rotor (102) auszuüben.

## Claims

1. Electric motor, comprising:
a rotor (100) with a first number of permanent magnets (101, 102, 103, 104), wherein each permanent magnet encompasses a first sector;
a stator (200) with a second number of pole feet, wherein a coil is wound around each pole foot of the second number of pole feet, and wherein a pole foot encompasses a second sector that is smaller than the first sector,
wherein a first group of coils (301, 302, 303, 304) is electrically connected via a first star point (311),
wherein a second group of coils (321, 322, 323, 324) is electrically connected via a second star point (331) to be conductive,
wherein the second star point (331) is electrically insulated from the first star point (311),
wherein a coil of the first group of coils (301, 302, 303, 304) is arranged between two coils of the second group of coils (321, 322, 323, 324); and
a controller (500) for applying drive signals to the first group of coils (301, 302, 303, 304) so as to provide the rotor (102) with a torque with respect to the stator (200), and for applying a control signal that differs from the drive signals to at least one coil (321, 322, 323, 324) of the second group of coils (321, 322, 323, 324),
wherein each coil of the first and second groups of coils comprises two connections, wherein one connection each of each coil is connected to the first and the second star point (311, 321), respectively,
wherein the respectively other connection of each coil is connected to a controllable switch (401, 403), wherein the controllable switch (401, 403) is configured to, as a function of a control signal of the control (500), connect the other connection of each coil to a positive reference potential, a negative reference potential, or a ground potential, or to switch the same into a no-load operation, and
wherein the controller (500) is configured to connect the coils of the first group either with the positive reference potential or the negative reference potential or the ground potential in a first interval, and to switch at least one of the coils of the second group into the no-load operation in the first interval, or to connect the coils of the second group either with the positive reference potential or the negative reference potential or the ground potential at a later second interval so as to exert a torque to the rotor (102) in the second interval.

2. Electric motor according to claim 1,
wherein the controller (500) is configured to apply the drive signals to the first group of coils (301, 302, 303, 304) in a first interval, and to apply drive signals to the second group of coils in a later second interval so as to provide the rotor (102) with a torque with respect to the stator (200) in the second interval, or
wherein the pole feet wound around the coils are arranged in a circular arrangement, wherein each pole foot encompasses a circular sector, and wherein one coil each of the other group is arranged between two coils of one group.
wherein each coil either belongs to the first group or to the second group and no coil belongs to both groups, or
wherein the controller (500) is configured to apply different potentials to neighboring coils in a group when the group is driven in an interval in which the rotor (102) is provided with the torque by the coils of the second group, or wherein the first group comprises four coils, and wherein the second group comprises four coils,
wherein the rotor (102) comprises four permanent magnet portions that are magnetized differently, and
wherein the controller (500) is configured to apply in one interval different voltages as the drive signals to two adjacent coils of the first group, or to apply the same voltage as the drive signals to two opposite coils of the first group.

3. Electric motor according to any one of the preceding claims,
wherein the controller (500) is configured to drive the first group of coils (301, 302, 303, 304) with the drive signals in a first interval, and to drive the second group of coils (321, 322, 323, 324) with the drive signals in a second interval, and
wherein the controller (500) is configured to switch the second group of coils (321, 322, 323, 324) to a ground potential or to a no-load operation at a start of the first interval after the end of the preceding interval, and to switch on a voltage supply of the coils of the second group of coils at a switch-on time before an end of the first interval, namely by using for the voltage supply a voltage value that is provided for the second interval in which the second group of coils (321, 322, 323, 324) is driven with the drive signals.

4. Electric motor according to claim 3,
wherein the controller (500) is configured to set the switch-on time as a function on a presettable rotational speed with respect to the start of the second interval.

5. Electric motor according to claim 2 or 3,
wherein the controller (500) is further configured to set the switch-on time to be earlier with respect to the end of the first interval so as to increase a rotational speed, or to set the switch-on time to be later with respect to the end of the first interval so as to decrease the rotational speed

6. Electric motor according to any one of the preceding claims,
wherein the control (500) comprises a first control unit (500a) provided solely for the first group of coils (501), and a second control unit (500b) provided solely for controlling the second group of coils (502), wherein each control unit comprises its own reference potential or its own ground potential.

7. Electric motor according to claim 6,
wherein the first control unit (500a) and the second control unit (500b), respectively, comprise controllable switches (S11, S12; S21, S22; S31, S32; S41, S42) per coil, wherein a controllable switch (S21, S31, S41) per coil is connected between the reference potential (600, 602) of the control unit and a connection (604, 605, 606, 607) of the corresponding coil that is not connected to the star point (311, 331), and
wherein a second controllable switch (S12, S22, S32, S42) is connected between the connection (604, 605, 606, 607) of the corresponding coil and the ground potential (601) of the corresponding control unit, wherein the second switch is further bypassed by a freewheeling diode (611, 612, 613, 614), wherein the controller (500) is configured to open or to close the controllable switches, or to increase or to decrease the reference potential.

8. Electric motor according to any one of the preceding claims,
wherein a sensor (621, 622, 623, 624) is allocated to a coil of the first group of coils so as to sense the current through the coil due to a drive signal for the coil,
wherein the controller (500) is configured
to determine, as a function of sensor signals of the sensors of the first group of coils (301, 302, 303, 304), a position or a positional deviation from a central position of the rotor (102), and
to apply, as a function of the position or the positional deviation, a closed-loop position control signal to a coil of the second group of coils (321, 322, 323, 324) in the first interval, or to a coil of the first group in a second interval following the first interval so as to reduce or eliminate the positional deviation from the central position.

9. Electric motor according to any one of the preceding claims,
wherein the controller (500) is configured to sense an induced current in at least one coil of the first group of coils (301, 302, 303, 304) due to a radial offset of the rotor (102) with respect to the stator (200), and to apply to at least one coil of the first or second group of coils a position variation signal configured such that the offset is reduced or eliminated.

10. Electric motor according to any one of the preceding claims,
wherein the controller (500) is configured
to sense a current or a variation of the current in a coil of the first group of coils (301, 302, 303, 304) (1100),
to determine from the current or the variation of the current and a position of the respective coil (1102, 1104, 1106) an indication as to a direction of the offset, and
to apply, as a function of the indication about the offset, a signal to one or two coils of the first group of coils (301, 302, 303, 304)or the second group of coils (321, 322, 323, 324) so as to reduce the offset, while the controller (500) controls the first group of coils, or
to apply to determined coils of the first group, while the controller drives the second group with drive signals in a later interval.

11. Electric motor according to any one of the preceding claims,
wherein the controller (500) is configured
to sense temporal progressions of currents in the first group of coils (301, 302, 303, 304) due to voltages applied as drive signals (1100),
to determine variations of the temporal progressions of the currents (1102),
to differently combine determined variations of the temporal progressions (1104) so as to obtain at least one sensing signal, and
wherein the controller (500) is configured to apply to at least one coil of the second group of coils (321, 322, 323, 324) as a control signal a position variation signal that depends on the at least one sensing signal (1108, 1120).

12. Electric motor according to claim 11,
wherein the first group of coils (301, 302, 303, 304) comprises four coils arranged at the stator (200) such that coil axes have an angle of between 80° and 100° relative to each other,
wherein the controller (500) is configured to combine the dissipations of two coils having an angle between 160 and 200° relative to each other so as to obtain two sensing results each,
wherein the controller (500) is configured to evaluate different states of the sensing signals so as to determine at least four different maximum and minimum gap positions, respectively, and
wherein the controller (500) is configured to select, as a function of the evaluated at least two sensing results, one or two closed-loop position control coils to which a positive potential is applied, while a negative potential is applied to at least one other closed-loop position control coil,
wherein the controller (500) is configured to apply the closed-loop position control potentials such that current flows in the same direction through opposite closed-loop position control coils, or such that current does not flow through opposite closed-loop position control coils.

13. Electric motor according to any one of the preceding claims,
wherein the motor is configured as a disc motor, and wherein the rotor (102) and the stator (200), respectively, have a radial expansion with respective to a rotation axis of the motor that is larger than or equal to twice the axial expansion, or
the electric motor using a magnetic bearing and not comprising a contact bearing.

14. Method for manufacturing an electric motor having a rotor (100) with a first number of permanent magnets (101, 102, 103, 104), wherein each permanent magnet encompasses a first sector; a stator (200) with a second number of pole feet, wherein a coil is wound around each pole foot of the second number of pole feet, and wherein a pole foot encompasses a second sector that is smaller than the first sector, comprising:
electrically connecting a first group of coils (301, 302, 303, 304) via a first star point (311),
electrically connecting a second group of coils (321, 322, 323, 324) via a second star point (331), wherein the second star point (331) is electrically insulated from the first star point (311), wherein a coil of the first group of coils (301, 302, 303, 304) is arranged between two coils of the second group of coils (321, 322, 323, 324); and
connecting a controller (500) to the coils of the first and the second group for applying drive signals to the first group (301, 302, 303, 304) of coils so as to provide the rotor (102) with a torque with respect to the stator (200), and for applying a control signal that differs from the drive signals to at least one coil (321, 322, 323, 324) of the second group of coils (321, 322, 323, 324),
wherein each coil of the first and second groups of coils (321, 322, 323, 324) comprises two connections, wherein one connection each of each coil is connected to the first and the second star point (311, 321), respectively,
wherein the respectively other connection of each coil is connected to a controllable switch (401, 403), wherein the controllable switch (401, 403) is configured to, as a function of a control signal of the control (500), connect the other connection of each coil to a positive reference potential, a negative reference potential, or a ground potential, or to switch the same into a no-load operation, and
wherein the controller (500) is configured to connect the coils of the first group either with the positive reference potential or the negative reference potential or the ground potential in a first interval, and to switch at least one of the coils of the second group into the no-load operation in the first interval, or to connect the coils of the second group either with the positive reference potential or the negative reference potential or the ground potential at a later second interval so as to exert a torque to the rotor (102) in the second interval.

15. Method for operating an electric motor having a rotor (100) with a first number of permanent magnets (101, 102, 103, 104), wherein each permanent magnet encompasses a first sector; a stator (200) with a second number of pole feet, wherein a coil is wound around each pole foot of the second number of pole feet, and wherein a pole foot encompasses a second sector that is smaller than the first sector, wherein a first group of coils (301, 302, 303, 304) is electrically connected via a first star point (311), wherein a second group of coils (321, 322, 323, 324) is electrically connected via a second star point (331) to be conductive, wherein the second star point (331) is electrically insulated from the first star point (311), wherein a coil of the first group of coils (301, 302, 303, 304) is arranged between two coils of the second group of coils (321, 322, 323, 324), comprising:
applying drive signals to the first group (301, 302, 303, 304) of coils so as to provide the rotor (102) with a torque with respect to the stator (200); and
applying a control signal that differs from the drive signals to at least one coil (321, 322, 323, 324) of the second group of coils (321, 322, 323, 324),
wherein each coil of the first and second groups of coils (321, 322, 323, 324) comprises two connections, wherein one connection each of each coil is connected to the first and the second star point (311, 321), respectively,
wherein the respectively other connection of each coil is connected to a controllable switch (401, 403), wherein the controllable switch (401, 403) is configured to, as a function of a control signal of the control (500), connect the other connection of each coil to a positive reference potential, a negative reference potential, or a ground potential, or to switch the same into a no-load operation, and
wherein the controller (500) is configured to connect the coils of the first group either with the positive reference potential or the negative reference potential or the ground potential in a first interval, and to switch at least one of the coils of the second group into the no-load operation in the first interval, or to connect the coils of the second group either with the positive reference potential or the negative reference potential or the ground potential at a later second interval so as to exert a torque to the rotor (102) in the second interval.

## Revendications

1. Moteur électrique, aux caractéristiques suivantes:
un rotor (100) avec un premier nombre d'aimants permanents (101, 102, 103, 104), où chaque aimant permanent comporte un premier secteur;
un stator (200) avec un deuxième nombre de pieds polaires, où une bobine est enroulée autour de chaque pied polaire du deuxième nombre de pieds polaires, et dans lequel un pied polaire comporte un deuxième secteur qui est plus petit que le premier secteur,
dans lequel un premier groupe de bobines (301, 302, 303, 304) sont connectées électriquement l'une à l'autre à travers un premier point neutre (311),
dans lequel un deuxième groupe de bobines (321, 322, 323, 324) sont connectées électriquement l'une à l'autre à travers un deuxième point neutre (331),
dans lequel le deuxième point neutre (331) est isolé électriquement du premier point neutre (311),
dans lequel une bobine du premier groupe de bobines (301, 302, 303, 304) est disposée entre deux bobines du deuxième groupe de bobines (321, 322, 323, 324); et
un moyen de commande (500) destiné à appliquer au premier groupe de bobines (301, 302, 303, 304) des signaux d'entraînement pour pourvoir le rotor (102) d'un couple par rapport au stator (200), et à appliquer à au moins une bobine (321, 322, 323, 324) du deuxième groupe de bobines (321, 322, 323, 324) un signal de commande qui est différent des signaux d'entraînement,
dans lequel chaque bobine du premier et du deuxième groupe de bobines présente deux connexions, où une connexion respective de chaque bobine est connectée au premier ou au deuxième point neutre (311, 321),
dans lequel l'autre connexion respective de chaque bobine est connectée à un commutateur pouvant être commandé (401, 403) respectif, où le commutateur pouvant être commandé (401, 403) est conçu pour connecter l'autre connexion de chaque bobine, en fonction d'un signal de commande du moyen de commande (500), à un potentiel de référence positif, un potentiel de référence négatif ou un potentiel de masse ou pour la commuter à un fonctionnement à vide, et
dans lequel le moyen de commande (500) est conçu pour connecter, dans un premier intervalle, les bobines du premier groupe respectivement soit au potentiel de référence positif, soit au potentiel de référence négatif, soit au potentiel de masse, et pour commuter, dans le premier intervalle, au moins une des bobines du deuxième groupe à un fonctionnement à vide ou pour connecter, dans un deuxième intervalle ultérieur, les bobines du deuxième groupe respectivement au moins soit au potentiel de référence positif, soit au potentiel de référence négatif, soit au potentiel de masse pour exercer, dans le deuxième intervalle, un couple sur le rotor (102).

2. Moteur électrique selon la revendication 1, dans lequel le moyen de commande (500) est conçu pour appliquer, dans un premier intervalle, les signaux d'entraînement au premier groupe de bobines (301, 302, 303, 304) et pour appliquer, dans un deuxième intervalle ultérieur, des signaux d'entraînement au deuxième groupe de bobines pour pourvoir, dans le deuxième intervalle, le rotor (102) d'un couple par rapport au stator (200), ou
dans lequel les pieds polaires autour desquels sont enroulées les bobines sont disposés selon un aménagement en cercle, où chaque pied polaire comporte un secteur circulaire, et dans lequel est disposée, entre deux bobines d'un groupe, respectivement une bobine de l'autre groupe, ou
dans lequel chaque bobine appartient soit au premier groupe, soit au deuxième groupe et aucune bobine n'appartient aux deux groupes, ou
dans lequel le moyen de commande (500) est conçu pour appliquer des potentiels différents respectifs à des bobines adjacentes l'une à l'autre dans un groupe lorsque le groupe est actionné dans un intervalle dans lequel le rotor (102) est pourvu du couple par les bobines du deuxième groupe, ou
dans lequel le premier groupe présente quatre bobines, et dans lequel le deuxième groupe présente quatre bobines, dans lequel le rotor (102) présente quatre segments d'aimant permanent magnétisés de manière différente, et dans lequel le moyen de commande (500) est conçu pour appliquer, dans un intervalle, à deux bobines adjacentes du premier groupe, comme signaux d'entraînement, des tensions différentes ou à deux bobines opposées du premier groupe, comme signaux d'entraînement, la même tension.

3. Moteur électrique selon l'une des revendications précédentes,
dans lequel le moyen de commande (500) est conçu pour commander, dans un premier intervalle, le premier groupe de bobines (301, 302, 303, 304) par les signaux d'entraînement et pour commander, dans un deuxième intervalle, le deuxième groupe de bobines (321, 322, 323, 324) par les signaux d'entraînement, et
dans lequel le moyen de commande (500) est conçu pour commuter, à un début du premier intervalle après la fin de l'intervalle précédent, le deuxième groupe de bobines (321, 322, 323, 324) à un potentiel de masse ou à un fonctionnement à vide, et pour act6iver avant une fin du premier intervalle, à un moment d'activation, une alimentation de tension vers les bobines du deuxième groupe de bobines, et ce à l'aide d'une valeur de tension pour l'alimentation de tension qui est prévue pour le deuxième intervalle dans lequel le deuxième groupe de bobines (321, 322, 323, 324) sont commandées par les signaux d'entraînement.

4. Moteur électrique selon la revendication 3,
dans lequel le moyen de commande (500) est conçu pour régler le moment d'activation en fonction d'un nombre de tours pouvant être prédéterminé en ce qui concerne le début du deuxième intervalle.

5. Moteur électrique selon la revendication 2 ou 3,
dans lequel le moyen de commande (500) est conçu par ailleurs pour établir, pour augmenter un nombre de tours, le moment d'activation plus tôt par rapport à la fin du premier intervalle ou pour établir, pour diminuer le nombre de tours, le moment d'activation plus tard par rapport à la fin du premier intervalle.

6. Moteur électrique selon l'une des revendications précédentes,
dans lequel le moyen de commande (500) présente une première unité de commande (500a), qui est prévue uniquement pour le premier groupe de bobines (501), et une deuxième unité de commande (500b), qui est prévue uniquement pour commander le deuxième groupe de bobines (502), dans lequel chaque unité de commande présente son propre potentiel de référence ou son propre potentiel de masse.

7. Moteur électrique selon la revendication 6,
dans lequel la première unité de commande (500a) ou la deuxième unité de commande (500b) présente des commutateurs pouvant être commandés (511, 512; S21, S22; S31, S32; S41, S42) par bobine, dans lequel un commutateur pouvant être commandé (S21, S31, S41) par bobine est connecté entre le potentiel de référence (600, 602) de l'unité de commande et une connexion (604, 605, 606, 607) de la bobine correspondante qui n'est pas connectée au point neutre (311, 331), et
dans lequel un deuxième commutateur pouvant être commandé (S12, S22, S32, S42) est connecté entre la connexion (604, 605, 606, 607) de la bobine correspondante et le potentiel de masse (601) de l'unité de commande correspondante, dans lequel le deuxième commutateur est par ailleurs ponté par une diode de roue libre (611, 612, 613, 614), dans lequel le moyen de commande (500) est conçu pour ouvrir ou fermer les commutateurs pouvant être commandés, ou pour augmenter ou diminuer le potentiel de référence.

8. Moteur électrique selon l'une des revendications précédentes,
dans lequel est associé à une bobine du premier groupe de bobines un capteur (621, 622, 623, 624) destiné à détecter le courant passant à travers la bobine sur base d'un signal d'entraînement pour la bobine,
dans lequel le moyen de commande (500) est conçu
pour déterminer, en fonction des signaux de capteur des capteurs du premier groupe de bobines (301, 302, 303, 304), une position ou une déviation de position par rapport à une position centrale du rotor (102), et
pour appliquer, en fonction de la position ou de la déviation de position, un signal de régulation de position à une bobine du deuxième groupe de bobines (321, 322, 323, 324) dans le premier intervalle ou à une bobine du premier groupe dans un deuxième intervalle qui suit le premier intervalle, pour réduire ou éliminer la déviation de position par rapport à la position centrale.

9. Moteur électrique selon l'une des revendications précédentes,
dans lequel le moyen de commande (500) est conçu pour détecter un courant induit dans au moins une bobine du premier groupe de bobines (301, 302, 303, 304) sur base d'un décalage radial du rotor (102) par rapport au stator (200) et pour appliquer à au moins une bobine du premier ou du deuxième groupe de bobines un signal de changement de position qui est conçu de sorte que le décalage soit réduit ou éliminé.

10. Moteur électrique selon l'une des revendications précédentes,
dans lequel le moyen de commande (500) est conçu
pour détecter (1100) un courant ou un changement de courant dans une bobine du premier groupe de bobines (301, 302, 303, 304),
pour déterminer (1102, 1104, 1106), à partir du courant ou du changement du courant et d'une position de la bobine respective, une indication d'une direction du décalage, et
pour appliquer à une ou deux bobines du premier groupe de bobines (301, 302, 303, 304) ou du deuxième groupe de bobines (321, 322, 323, 324) un signal en fonction de l'indication du décalage, pour réduire le décalage tandis que le moyen de commande (500) commande le premier groupe de bobines, ou
pour appliquer aux bobines déterminées du premier groupe, tandis que le moyen de commande (500) commande, dans un intervalle ultérieur, le deuxième groupe à l'aide de signaux d'entraînement.

11. Moteur électrique selon l'une des revendications précédentes,
dans lequel le moyen de commande (500) est conçu
pour détecter (1100) les évolutions dans le temps de courants dans le premier groupe de bobines (301, 302, 303, 304) sur base des tensions appliquées comme signaux d'entraînement,
pour déterminer (1102) les changements des évolutions dans le temps des courants,
pour combiner de manière différente (1104) les changements déterminés des évolutions dans le temps, pour obtenir au moins un signal de détection, et
dans lequel le moyen de commande (500) est conçu pour appliquer à au moins une bobine du deuxième groupe de bobines (321, 322, 323, 324), comme signal de commande, un signal de changement de position qui dépend d'au moins un signal de détection (1108, 1120).

12. Moteur électrique selon la revendication 11,
dans lequel le premier groupe de bobines (301, 302, 303, 304) présente quatre bobines qui sont disposées sur le stator (200) de sorte que les axes de bobine présentent entre eux un angle compris entre 80 et 100°,
dans lequel le moyen de commande (500) est conçu pour combiner les dérivations de deux bobines qui présentent entre elles un angle compris entre 160 et 200°, pour obtenir chaque fois deux résultats de détection,
dans lequel le moyen de commande (500) est conçu pour évaluer différents états des signaux de détection pour déterminer au moins quatre positions d'écart maximales ou minimales différentes, et
dans lequel le moyen de commande (500) est conçu pour sélectionner, en fonction des au moins deux résultats de détection évalués, une ou deux bobines de régulation de position auxquelles est appliqué un potentiel positif, tandis qu'il est appliqué, à au moins une autre bobine de régulation de position, un potentiel négatif,
dans lequel le moyen de commande (500) est conçu pour régler les potentiels de régulation de position de sorte que le courant circule à travers des bobines de régulation de position opposées dans la même direction, ou que le courant ne circule pas à travers les bobines de régulation de position opposées.

13. Moteur électrique selon l'une des revendications précédentes,
dans lequel le moteur est conçu comme moteur à disque et dans lequel le rotor (102) ou le stator (200) présente une extension radiale par rapport à un axe de rotation du moteur qui est supérieure ou égale à deux fois l'extension axiale, ou
qui est monté de manière magnétique et ne présente pas de palier de contact.

14. Procédé de fabrication d'un moteur électrique avec un rotor (100) avec un premier nombre d'aimants permanents (101, 102, 103, 104), dans lequel chaque aimant permanent comporte un premier secteur; un stator (200) avec un deuxième nombre de pieds polaires, dans lequel une bobine est enroulée autour de chaque pied polaire du deuxième nombre de pieds polaires, et dans lequel un pied polaire comporte un deuxième secteur qui est plus petit que le premier secteur, aux caractéristiques suivantes consistant à:
connecter de manière électriquement conductrice un premier groupe de bobines (301, 302, 303, 304) à travers un premier point neutre (311),
connecter de manière électriquement conductrice un deuxième groupe de bobines (321, 322, 323, 324) à travers un deuxième point neutre (331), où le deuxième point neutre (331) est isolé électriquement du premier point neutre (311), où une bobine du premier groupe de bobines (301, 302, 303, 304) est disposé entre deux bobines du deuxième groupe de bobines (321, 322, 323, 324); et
connecter un moyen de commande (500) aux bobines du premier et du deuxième groupe, pour appliquer au premier groupe (301, 302, 303, 304) de bobines des signaux d'entraînement pour pourvoir le rotor (102) d'un couple par rapport au stator (200, et pour appliquer à au moins une bobine (321, 322, 323, 324) du deuxième groupe de bobines (321, 322, 323, 324) un signal de commande qui diffère des signaux d'entraînement,
dans lequel chaque bobine du premier et du deuxième groupe de bobines (321, 322, 323, 324) présente deux connexions, dans lequel une connexion de chaque bobine est connectée au premier ou au deuxième point neutre (311, 321),
dans lequel l'autre connexion respective de chaque bobine est connectée à un commutateur pouvant être commandé (401, 403), dans lequel le commutateur pouvant être commandé (401, 403) est conçu pour connecter l'autre connexion de chaque bobine, en fonction d'un signal de commande du moyen de commande (500), à un potentiel de référence positif, un potentiel de référence négatif ou un potentiel de masse ou pour la commuter à un fonctionnement à vide, et
dans lequel le moyen de commande (500) est conçu pour connecter, dans un premier intervalle, les bobines du premier groupe respectivement soit au potentiel de référence positif, soit au potentiel de référence négatif, soit au potentiel de masse, et pour commuter, dans le premier intervalle, au moins une des bobines du deuxième groupe à un fonctionnement à vide ou pour connecter, dans un deuxième intervalle ultérieur, les bobines du deuxième groupe respectivement au moins soit au potentiel de référence positif, soit au potentiel de référence négatif, soit au potentiel de masse pour exercer, dans le deuxième intervalle, un couple sur le rotor (102).

15. Procédé pour faire fonctionner un moteur électrique avec un rotor (100) avec un premier nombre d'aimants permanents (101, 102, 103, 104), dans lequel chaque aimant permanent comporte un premier secteur; un stator (200) avec un deuxième nombre de pieds polaires, dans lequel une bobine est enroulée autour de chaque pied polaire du deuxième nombre de pieds polaires, et dans lequel un pied polaire comporte un deuxième secteur qui est plus petit que le premier secteur, dans lequel un premier groupe des bobines (301, 302, 303, 304) sont connectées de manière électriquement conductrice l'une à l'autre à travers un premier point neutre (311), dans lequel un deuxième groupe de bobines (321, 322, 323, 324) sont connectées de manière électriquement conductrice l'une à l'autre à travers un deuxième point neutre (331), dans lequel le deuxième point neutre (331) est isolé électriquement du premier point neutre (311), dans lequel une bobine du premier groupe de bobines (301, 302, 303, 304) est disposée entre deux bobines du deuxième groupe de bobines (321, 322, 323, 324), aux étapes suivantes consistant à:
appliquer des signaux d'entraînement au premier groupe {301, 302, 303, 304) de bobines pour pourvoir le rotor (102) d'un couple par rapport au stator (200); et
appliquer à au moins une bobine (321, 322, 323, 324) du deuxième groupe de bobines (321, 322, 323, 324) un signal de commande qui diffère des signaux d'entraînement,
dans lequel chaque bobine du premier et du deuxième groupe de bobines (321, 322, 323, 324) présente deux connexions, dans lequel une connexion de chaque bobine est connectée respectivement au premier ou au deuxième point neutre (311, 321),
dans lequel l'autre connexion respective de chaque bobine est connectée à un commutateur pouvant être commandé (401, 403) respectif, dans lequel le commutateur pouvant être commandé (401, 403) est conçu pour connecter l'autre connexion de chaque bobine, en fonction d'un signal de commande du moyen de commande (500), à un potentiel de référence positif, un potentiel de référence négatif ou un potentiel de masse ou pour la commuter à un fonctionnement à vide, et
dans lequel le moyen de commande (500) est conçu pour connecter, dans un premier intervalle, les bobines du premier groupe respectivement soit au potentiel de référence positif, soit au potentiel de référence négatif, soit au potentiel de masse, et pour commuter, dans le premier intervalle, au moins une des bobines du deuxième groupe à un fonctionnement à vide ou pour connecter, dans un deuxième intervalle ultérieur, les bobines du deuxième groupe respectivement au moins soit au potentiel de référence positif, soit au potentiel de référence négatif, soit au potentiel de masse pour exercer, dans le deuxième intervalle, un couple sur le rotor (102).
